# EUROPEAN PATENT APPLICATION

(11) **EP 4 827 090 A1**
(43) Date of publication of application: **21.10.2026**
(21) Application number: 25315131.0
(22) Date of filing: 16.04.2025
(51) Int. Cl.: H04N 19/17, H04N 19/46, H04N 19/597, H04N 19/70

(54) **DEPTH CODING USING DEPTH BANDS AND SPATIAL SUB-REGIONS**

(71) Applicant: Beijing Xiaomi Mobile Software Co., Ltd., Beijing Beijing 100085 (CN)
(72) Inventor: Alexiou, Evangelos, Beijing, 100085 (CN); Thomas, Emmanuel, Beijing, 100085 (CN); Potetsianakis, Emmanouil, Beijing, 100085 (CN)
(74) Representative: Zimmermann, Tankred Klaus

(57) **Abstract**

A method for transforming a source depth image into a target depth image comprises: obtaining the source depth image comprising a multitude of source depth image samples each comprising a source depth image sample value being within a source depth image sample bit depth; determining a plurality of spatial sub-regions of the source depth image such that each of the spatial sub-regions comprises a subset of the source depth image samples; and for each of the spatial sub-regions: determining an associated set of source depth bands from the source depth sub-range.

## Description

### TECHNICAL FIELD

The present application relates to depth coding using depth bands and spatial sub-regions. The present invention further relates to transforming the source depth image samples of the spatial sub-regions into target depth image.

### BACKGROUND

Depth information is becoming increasingly relevant in modern imaging systems, facilitating the analysis of 3D scenes in extended Reality (XR) applications, computer vision tasks, and robotic systems.

Depth data consist of a collection of depth values, each indicating the distance of a point in the scene from a reference point or plane (e.g., camera centre, or camera plane defined by the camera's position). Depth data are commonly represented by image representations, namely, depth images, although entirely different formats could be used, such as series/arrays of XYZ coordinates. Colour information is often carried alongside depth data. In this case, the term RGBD is common, with RGB indicating colour components (Red Green Blue) and D depth data.

There is a wide variety of technologies to obtain depth data, including depth sensing and depth estimation methods implemented by physical cameras, virtual cameras or Artificial Intelligence (Al) models, in real or simulated environments. The most mature methods for commercial, physical devices nowadays are stereo vision, motion stereo, structured light, time-of-flight, and Light Detection And Ranging (LiDAR). Each method has its working principle, with some retrieving directly depth data (e.g., time-of-flight and LiDAR), while others estimating them based on texture images (e.g., stereo vision, motion stereo and structured light). Data-driven solutions using Al models have become a notable alternative for depth estimation in recent years, gaining momentum. These models are designed to perform tasks related to the inference, completion or generation of depth data, often relying on some input texture or depth information.

Compression is required to decrease data size requirements for storage and transmission. Existing encoding methods for depth data exploit their specific characteristics, such as the presence of smooth areas (e.g., foreground objects) and sharp discontinuities (e.g., occlusions), which are determined by some type of scene decomposition (e.g., object boundaries detection) followed by encoding of corresponding regions. There are other methods employing generic compression principles, thus, without making any assumptions about the nature/distribution of the depth data. Alternative methods propose colour space transformations to exploit existing image/video infrastructure, while others introduce new modules to extend existing image/video coding architectures.

### Depth representations

### General

In this section, definitions of terms that are used in the context of this invention are provided.

### Depth data

Depth data comprise depth values, with each depth value denoting a distance of a given point in 3D space relative to an origin, as measured along a certain direction.

The direction is often defined either as a line between a point and a plane, or as a line between two points. Depending on the direction, different distances are computed. Among other ways, the direction could be determined by the selection of the origin, which could be set either as the camera plane or the camera centre. In the former case, the depth data represent perpendicular distances, wherein the perpendicular distance between two objects is the distance from one to the other, measured along a line that is perpendicular to one or both" [1], while in the latter case, the depth data represent Euclidean distances.

Depth data convey the topological information of a scene as captured from a specific viewpoint, enabling to infer obstructions and occlusions of the scene. Depth values can be obtained only for points of the scene that can be connected with the camera centre through unobstructed lines (i.e., scene points that are in the line-of-sight of the camera and are not occluded).

The term "camera" is used, considering that depth data could be obtained through sensing using a "depth camera", or through estimation using a "colour camera".

### Depth image

A depth image is defined as an image representation of depth data. A depth image comprises a 2D array of samples, with each sample corresponding to a discrete point in the 3D space, and the sample value representing the depth value of that point.

Depth data are commonly represented by floating point numbers and are often quantized to limit storage requirements and to adapt to binary format constraints. Depth images are most commonly encoded as grayscale (mono-component or monochrome) images at a specific bit depth. In this case, different intensities of grey are used to indicate different (quantized) depth values (e.g., white colour could indicate that a point is nearby and black that is far away). Depth images could also be encoded as colour (three-component) images at a specific bit depth. In this case, different colours could be used to indicate different (quantized) depth values. Alternatively, different colours could be used to indicate semantically different objects and different brightness levels could be used to indicate different (quantized) depth values.

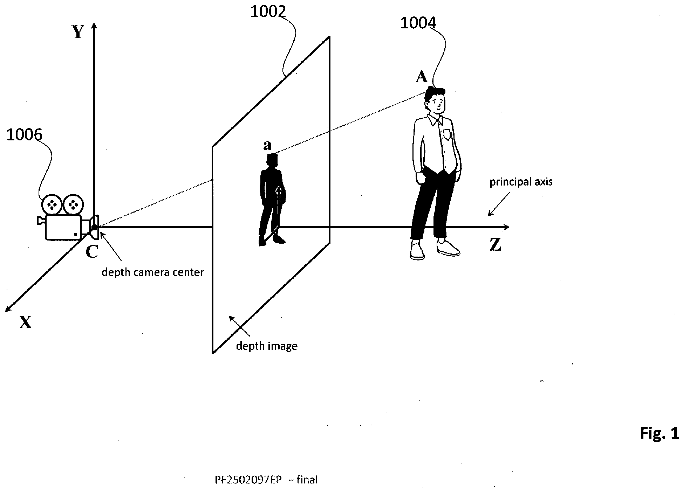

Fig. 1 presents an example of capturing a depth image 1002 of a physical environment 1004 using a depth camera 1006, assuming an ideal pinhole camera model. In this example, given a point A on the observed real-world geometry and a corresponding sample a in the depth image, the value at a is set equal to their perpendicular distance. This is obtained as the length of CA projected onto the principal axis Z, or equivalently the z-coordinate of A relative to the depth camera centre C. There are other distances that can be used to set the value of a, such as the Euclidean distance of CA. However, the perpendicular distance is more commonly used.

A depth image typically corresponds to depth data obtained at a specific time instance. If consecutive depth images are obtained over time, they are typically arranged in the form of a depth video. The spatial resolution (i.e., the number of samples) and the bit depth (i.e., the number of bits per sample value) of a depth image depend on the camera's specifications, in corresponding trade-offs between data size and data precision. For spatial resolution, the dimensions range between 160x120 and 640x480 in ARCore [3], 424x240 and 1280x720 in Intel RealSense D400 series [4], and 640x576 and 1024x1024 in Microsoft Azure Kinect [5]. For bit depth, the 16-bit unsigned integer representation is among the most popular choices (e.g., ARCore [3], Intel RealSense D400 series [4], and Microsoft Azure Kinect [5]).

In the following sections, the terms "depth map" and "depthmap" are used interchangeably to refer to a "depth image", as defined in the current section.

In the following sections the term "depth image" is used, but the terms "range image", "disparity image" or "disparity map" may be equivalently used in literature.

In the following sections, the term "source depth image" refers to a depth image that contains raw depth values as captured or estimated by the source (e.g., floating point numbers), without introducing any processing that would alter the spatial resolution (e.g., downsampling, downscaling) or bit depth granularity (e.g., quantization). It is considered that even if the raw depth data are originally represented in a different format (e.g., series/arrays of XYZ coordinates), a "source depth image" can be obtained by mapping all raw depth values in a suitable 2D array of samples, with each sample value representing the corresponding raw depth value at the original bit depth.

### RGBD image

An RGBD image is defined as an image representation of spatio-temporally aligned colour and depth data. An RGBD image comprises a 2D array of samples, with each sample corresponding to a discrete point in the 3D space, and the sample value representing the colour (RGB) and the depth (D) value of that point.

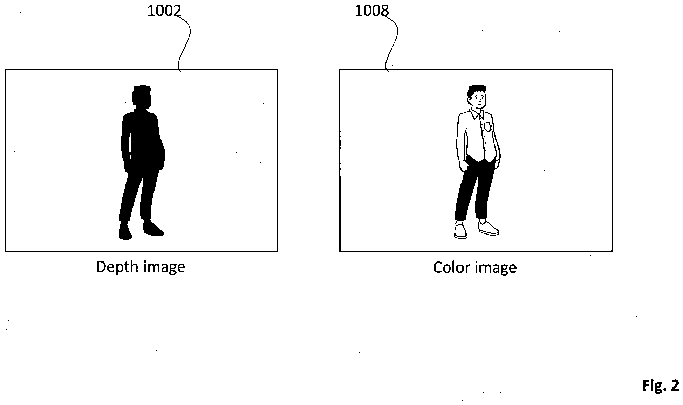

An RGBD image is typically expressed as a combination of a depth image 1002 and a colour image 1008 captured at the same time and depict the same model, as illustrated in Fig. 2.

By definition, a depth image of a scene can be obtained and used regardless of whether a corresponding colour image of the same scene is obtained or not. In other terms, depth and colour images are in principle decoupled, excluding depth estimation methods that rely on colour images, e.g., stereo vision methods. Depth and colour images can be of different spatial resolution (image resolution), bit depth (number of bits per sample), temporal sampling (frame rate), spatial coherence (taken at different point in space), temporal coherence (taken at different point in time), or projection (lens system).

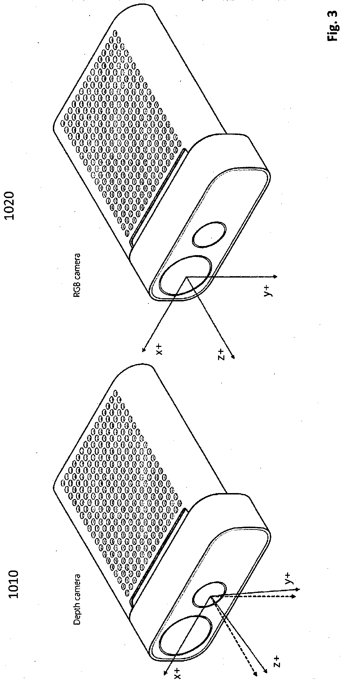

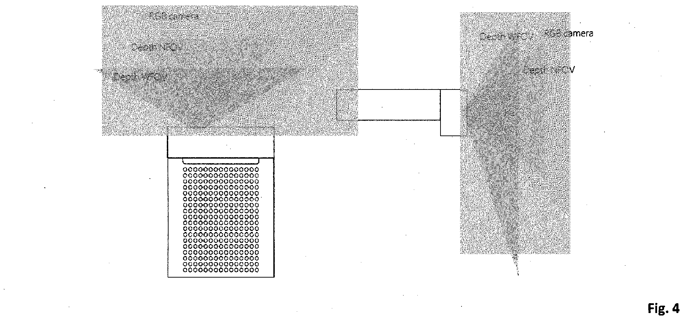

In practice, devices equipped with a depth camera are often also supplied with colour cameras. Moreover, colour cameras may be used to estimate depth data (e.g., Al models, stereo vision methods). Therefore, depth images usually accompany (or are accompanied by) colour images. An example is given by the Microsoft Azure Kinect. It is equipped with both a depth camera and a colour camera of different features (i.e., different lenses, different sensor resolution, different field-of-view, spatially distant), as seen on Fig. 3 and Fig. 4. Fig. 3 shows a schematic perspective illustration of an Azure Kinect depth camera 1010 and colour camera 1020 position and coordinate system as indicated in [6]. Fig. 4 shows an Azure Kinect depth and colour camera field-of-view as indicated in [7].

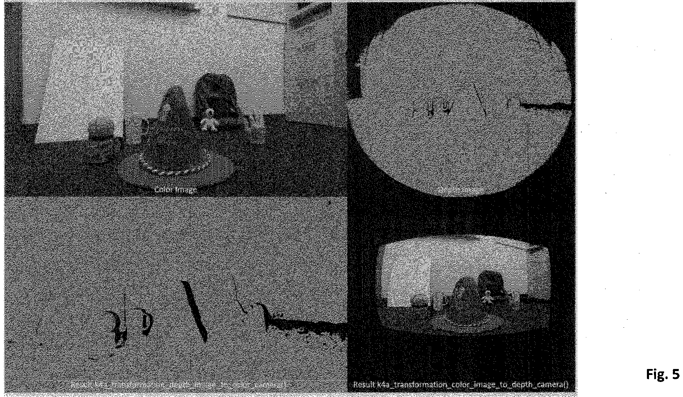

As a result, the images captured by the depth and the colour cameras do not represent exactly the same part of the scene. For common applications, however, it is desirable to be able to relate one sample of the depth image to one sample of the colour image. Therefore, there is need for a known spatio-temporal relationship between them. For example, the Azure Kinect SDK provides a transformation function [8] to convert either the colour or the depth image to the other's coordinate system. Fig. 5 represents the two available image transformations. On the left side, the depth image at the bottom has been aligned with the colour image at the top. Conversely, on the right side, the colour image has been aligned with the depth image. In other words, Fig. 5 shows Azure Kinect sensor SDK image transformations as known from [8].

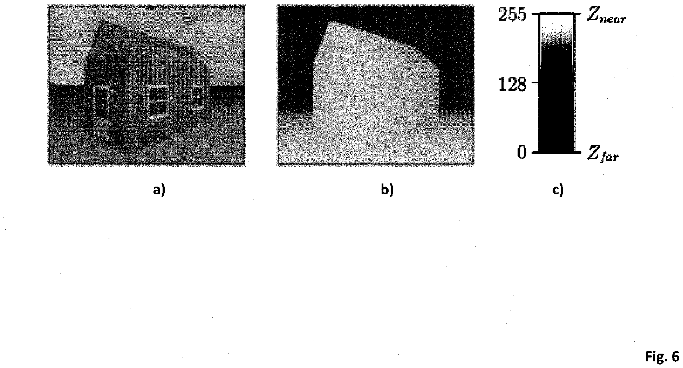

Fig. 6a-c present the concept of an RGBD image, with the depth image encoded as an 8-bit grayscale image taking values between 0 and 255. Fig. 6 represents an example of the data representation format consisting of (a) regular 2D colour video; (b) associated 8-bit depth-images that are normalised to near clipping plane Znear and a far clipping plane Zfar. In Fig. 6a-c, there is shown the RGBD image from a computer-generated image as indicated in [9].

The same concept can be extended to RGBD video sequences, wherein each image of the colour video sequence is associated with a corresponding depth image from a depth video sequence.

RGBD images are often called 2.5D images. Specifically, a colour image provides the appearance of a 3D scene, as perceived from the capturing viewpoint and as projected onto a 2D image plane. In this process there is necessarily loss of information about one dimension. A depth image captures this lost dimension by carrying the topology of the 3D scene, as perceived from the capturing viewpoint. Combined, they provide all necessary information to fully reproduce a 3D view of this scene from the capturing viewpoint. However, by changing the viewpoint, occluded objects will be perceived as missing regions, thus, not enabling a complete 3D viewing experience, which justifies the usage of the term 2.5D.

### Depth image compression

There can be different ways to devise a taxonomy of depth image codecs. Below, for the shake of this disclosure, existing techniques are split to the following classes: (a) MPEG-based codecs; these are proposed and implemented by the MPEG standardization body, (b) video-based codecs; these are making use of existing image/video solutions, (c) extensions of video-based codecs; these rely upon existing image/video solutions, but extend them in certain aspects, (d) decomposition-based codecs; these are making use of depth image characteristics spitting them to smooth regions abrupted by sharp edges, and (e) generic-based codecs; these make use of data-agnostic compression methods.

### MPEG-based codecs

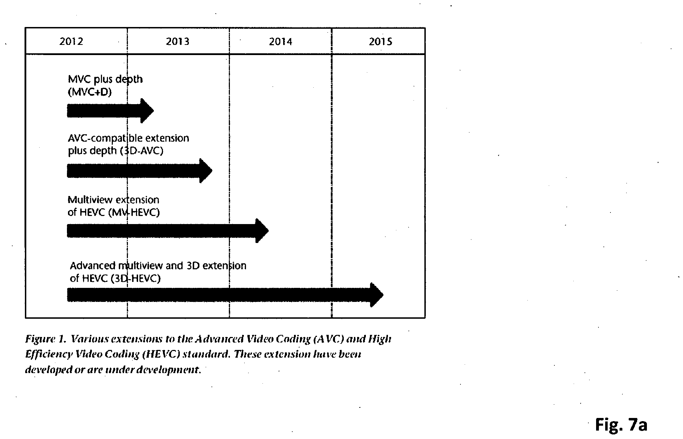

In this class are considered codecs developed by MPEG to handle depth data. Fig. 7a shows a schematic chart representing an extension of MPEG video codecs handling depth data as known from [10].

### MVC

The multiview extension of AVC, which is referred to as MVC, has been developed for the coding of two or more views. A key feature of this standard is that it maintains AVC compatibility, meaning that one view of the compressed multiview bitstream can be decoded by a legacy AVC decoder. Relative to independent coding of all views, compression gain is achieved by allowing the other views to be predicted using pictures from different views at the same time instances. In this process, known as inter-view prediction, a block-based disparity shift between the reference view and the current views is determined and is used to perform a disparity-compensated prediction. This is similar to the motion-compensated prediction used in conventional video coding, but it is based on pictures with different viewpoints rather than pictures at different time instances.

The MVC approach is simply defined by two features: extending the high-level syntax so that the appropriate signalling of view identifiers and their references is supported and defining a process by which decoded pictures of other views can be used to predict a current picture in another view.

### MVC+D

In the case of AVC, it was decided to specify an independent second stream for the representation of depth as well as high-level syntax signalling of the necessary information to express the interpretation of the depth data and its association with the video data. This approach does not involve macroblock-level changes to the AVC or MVC syntax, semantics, and decoding processes. The corresponding 3D video codec is referred to as MVC+D.

### MV-HEVC

In the MV-HEVC framework, support for depth maps will be realized with auxiliary picture syntax. The auxiliary picture decoding process would the same for video or Multiview video, but it may not necessarily have normative decoding requirements as part of a profile. This would enable applications to optionally decode depth maps. If the industry desires an additional level of interoperability, a profile that requires the capability to decode depth would be added at a later stage. This approach differs from that taken in the MVC+D extension, which adds support for depth using specially designated network abstraction layer (NAL) units for depth and defines a dedicated profile for the decoding of multiview plus depth video.

### 3D-AVC and 3D-HEVC

Depth views in 3D-AVC are coded similar to MVC+D, and no block-level changes for depth coding have been introduced. In 3D-AVC, the texture information of a single view is coded in a manner that is compatible with AVC.

In the HEVC family, the 3D-HEVC extension is specified. As with 3D-AVC, block-level coding tools for texture views have been introduced into the draft specification of 3D-HEVC. In addition, novel techniques for improved coding of depth have been accepted into the specification.

### Extensions of video-based codecs

In this class are considered depth codecs that make use of existing image-based or video-based codecs. Often, these methods rely on colourizing depth data (i.e., transforming them from depth to colour space). On one hand, they exploit widely used infrastructure for image and video coding; however, since such methods are not optimized for depth information, their usage often leads to unnatural artifacts.

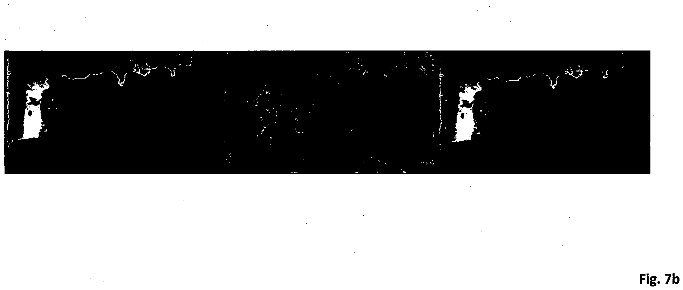

One example is the compression approach implemented by Intel RealSense depth cameras, by colourizing depth information [11]. Fig. 7b shows an original depth image of D435 (left), a representation of a colourised depth image with JPG compression (centre) and a recovered depth image from colourised and JPG compressed depth (right).

The Intel RealSense Depth Camera, D400 series can output high-resolution depth image up to 1280 x 720 with 16-bit depth resolution [1]. In order to efficiently store such high-resolution images in a limited disk space or to minimize the transmission bandwidth, an appropriate compression technique is required.

This paper proposes a simple colourization method for depth images. By appropriately colourizing the depth image, the depth image can subsequently be treated as a normal RGB image which can easily be compressed, stored, and transmitted using widely available HW and software tools.

The proposed colourization process imposes the limitation of needing to fit a 16-bit depth map into a 10.5-bit colour image. It is recommended to perform the colourization only after first limiting the depth range to a subset of the full depth 0 ~ 65535 range, and to re-normalize it. The depth range can, for example, be determined by windowing it to between a minimum depth value dmin and a maximum depth value dmax. The greater the depth range, the coarser the quantization of the depth value becomes. There are two methods for this colourization: uniform colourization which directly converts the depth value, and inverse colourization which converts the disparity value (which is the reciprocal of the depth value). Uniform colourization quantizes the entire depth range uniformly. In inverse colour colourization, quantization is finer at closer depths and coarser at longer depths. Inverse colourization is particularly well suited to depth cameras, like the D400 series, which derive depth from triangulation, which inherently has an inverse relationship between resolution and distance away.

In [12], another transformation from depth to colour domain is proposed.

There is presented an encoding scheme that efficiently converts the single-channel depth images to standard 8-bit three-channel images, which can then be streamed using standard codecs. The encoding scheme ensures that the compression affects the depth values as little as possible.

The indicated goal is to reconstruct the original depth values as accurately as possible after compression/decompression. Compression schemes for videos are highly tuned for colour video, taking into account human perception, e.g., by spending fewer bits on colour than luminance information, and so forth. Of course, these insights do not apply to depth compression. On the plus side, video codecs compress 24 bits of data per pixel (3×8 bits), whereas there are only 16 bits per pixel as input. Naively multiplexing the 16-bit depth values into two 8-bit values and passing those into a video codec (leaving the third channel empty) creates severe artefacts; duplicating some of the bits in order to fill the available 3×8 bits does not improve quality much.

It is proposed a robust encoding of 16-bit depth values into 3×8 bits, such that the decoded depth maps suffer from very few compression artefacts. The scheme is designed to be resilient to quantisation, and comparatively robust against downsampling (convolution) and altered intensities due to lossy compression.

The solution requires negligible computational overhead, and works well with several compression algorithms such as JPEG, VP8 and H.264.

In 13, a method for converting raw depth data to one-component colour videos (i.e., grayscale videos) to exploit existing video coding infrastructure, is proposed.

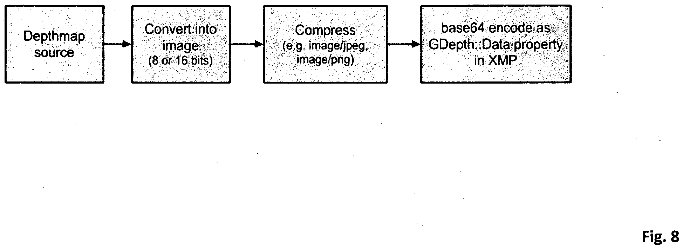

A depthmap is serialized as a set of XMP properties. As part of the serialization process, the depthmap is first converted to a traditional image format. The encoding pipeline contains three steps (see Fig. 8):
- Convert from the input format (e.g. float or int32 values) to an integer grayscale image format, e.g. bytes (8 bits) or words (16-bit).
- Compress using a standard image codec, e.g. JPEG or PNG.
- Serialize as a base64 string XMP property.

The pipeline can be lossless or lossy, depending on the number of bits of the original depthmap and the number of bits used to store it, e.g. 8 bits for an JPEG codec and 8 or 16 bits for a PNG codec.

Two different formats are currently supported: RangeLinear and Rangelnverse. Rangelnverse is the recommended format if the depthmap will lose precision when encoded, e.g. when converting from float to 8-bit. It allocates more bits to the near depth values and fewer bits to the far values, in a similar way to how the z-buffer works in GPU cards.

In [14], a method to losslessly reduce the bit depth of a depth image, is proposed.

An idea of [14] is to losslessly transform a higher bit-depth source depth image to a lower bit-depth target depth image using source depth sub-ranges, which combined with generated metadata enables the reconstruction of the higher bit-depth source depth image. The lossless transformation enables no loss of precision for source depth image sample values, while the lower bit-depth of the target depth image facilitates usage of conventional encoders.

In the proposed "Pre-process" step, the following tasks are performed: (a) the source depth range of the higher bit-depth source depth image is split into source depth sub-ranges, (b) the source depth image samples are associated with the source depth sub-ranges, and (c) the source depth image sample values are transformed accordingly to lower bit-depth target depth image sample values that respect the target depth range. The lower bit-depth target depth image can then be coded with a lower bit-depth codec. In the proposed "Metadata" step, the source depth sub-ranges and the association information between source depth image samples and source depth sub-ranges are signalled, to enable reconstruction of the higher bit-depth source depth image.

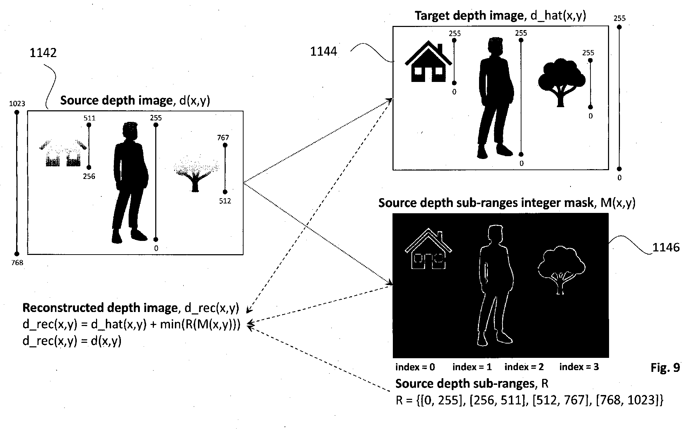

A graphic illustration of the main idea is presented in Fig. 9.

In Fig. 9 there is shown a source depth image 1142 of 10 bits d(x,y) that is decomposed into a target depth image 1144 of 8 bits d_hat(x,y) and a 2-bit source depth sub-ranges integer mask 1146 M(x,y) that carries the association information between source depth image samples and source depth sub-ranges R. The reconstructed depth image d_rec(x,y) is obtained using the target depth image, the source depth sub-ranges integer mask, and the source depth sub-ranges.

In 15, a method to reduce the bit depth and the bitrate of a depth image by quality adaptation in determined spatial sub-regions, is proposed. An idea of [15] is to transform a higher bit-depth source depth image into a lower bit-depth target depth image based on spatial sub-regions, which combined with generated metadata enable the reconstruction of a version of the higher bit-depth source depth image. The spatial sub-regions can be determined and their quality can be adjusted in the target depth image by applying suitable transformation functions in a pre-encoding step, while the lower bit depth of the target depth image enables the usage of conventional codecs.

In [15] a solution is presented that can be implemented by introducing a pre-encoding and a post-decoding step. At the local device, the pre-encoding step is introduced to: (a) determine spatial sub-regions in a higher bit-depth source depth image with values belonging to a source depth range, (b) associate the source depth image samples with the spatial sub-regions, (c) transform the source depth image sample values per spatial sub-region into lower bit-depth target depth image sample values that belong to a target depth range, and (d) generate associated metadata that consist of (i) the source depth sub-range per spatial sub-region, (ii) the transformation per spatial sub-region, and (ii) the association information between source depth image samples and spatial sub-regions. The lower bit-depth target depth image is encoded and together with the associated metadata are encapsulated and transmitted. At the remote device, the encapsulated data are received, the lower bit-depth target depth image is decoded, and the associated metadata are parsed. The post-decoding step is introduced to reconstruct a version of the higher bit-depth source depth image from the decoded target depth image and the parsed associated metadata, with values belonging to the source depth range. Note that the pre-encoding step doesn't interfere with the encoding process, and the post-decoding step doesn't interfere with the decoding process.

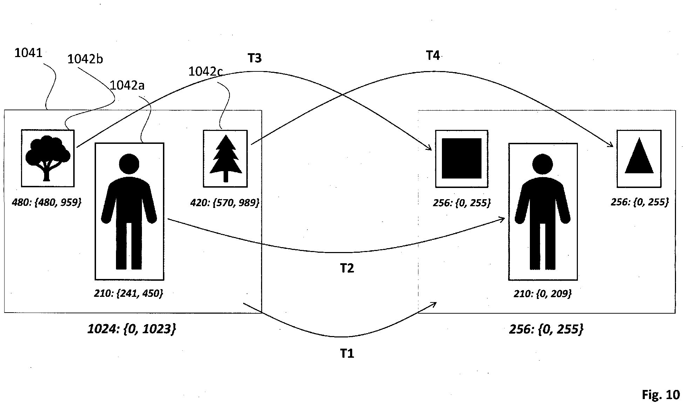

A graphic illustration of the concept of [15] is presented in Fig. 10. Therein a higher bit-depth (i.e., 10 bits) source depth image 1041 is decomposed into spatial sub-regions 1042a-c, indicated by bounding boxes, each having a source depth sub-range indicated underneath (i.e., *length: {start, end}*)*.* A different transformation function (i.e., T1-T4) is applied to source depth image samples per spatial sub-region, leading to corresponding lower bit-depth (i.e., 8 bits) target depth image samples of different quality. Specifically, T2 is a lossless transformation, shifting the source depth image sample values from the source depth sub-range {241, 450} to a sub-range of the target depth range {0, 209}; T1, T3, and T4 are lossy transformations, mapping corresponding source depth image sample values to the entire target depth range. Note that the rectangle and the triangle indicate lossy versions of the two trees after applying the T3 and T4, respectively.

### Extending video-based codecs

In this class are considered depth codecs that enhance image-/video-based codecs by applying some pre-/post-processing modules suitable for depth data. Their advantage is that these methods rely upon widely used infrastructure, while adapting the content for better efficiency; however, they cannot be straightforwardly used without integration of the proposed modules.

One example is given in [16], which proposes a pre-processing step that considers the noise characteristics of the depth sensor in use.

This paper proposes a lossy Kinect-like depth compression framework based on the existing codecs, aiming to enhance the coding efficiency while preserving the depth features for further applications. In the proposed framework, the Kinect-like depth is reformed first by divisive normalized bilateral filter (DNBL) to suppress the depth noises caused by disparity normalization, and then block-level depth padding is implemented for invalid depth region compensation in collaboration with mask coding to eliminate the sharp variation caused by depth measurement failures. Before the traditional video coding, the inter-frame correlation of reformed depth is explored by proposed 2D+T prediction, in which depth volume is developed to simulate 3D volume to generate pseudo 3D prediction reference for depth uniqueness detection. The unique depth region, called active region is fed into the video encoder for traditional intra and inter prediction with residual coding, while the inactive region is skipped during depth coding.

Another example is given in [17] that depends on a post-processing, boundary reconstruction filter that is implemented in-loop.

An in-loop reconstruction filter that improves the depth-coding performance as well as the rendering quality of virtual views based upon the coded depth is proposed.

The proposed depth reconstruction filter consists of the following two filters: 1) a frequent-close filter to recover object boundaries; 2) a bilateral filter to eliminate the remaining errors.

The depth reconstruction filter was implemented in the H.264/AVC reference software and was located after the deblocking filter.

### Decomposition-based codecs

In this class are considered depth codecs that rely on some form of decomposition (e.g., object segmentation, edge detection, plane detection, tree decomposition, mesh generation) to distinguish between smooth surfaces and abrupt depth discontinuities. Different techniques can then be employed to encode the decomposition, as well as the decomposed regions (e.g., image-based codecs, modelling functions, geometric wavelets, mesh coding). This is the most popular class in the academic literature and is considered most suitable in terms of efficiency since it exploits specific characteristics of depth data; however, these methods are typically associated with higher computational costs and cannot be straightforwardly used by deployed video coding infrastructure.

An example that falls in this class of codecs is given in [18].

Firstly, region-of-interest (ROI) coding is considered, where those regions of the image are identified where accurate depth is most crucial. Secondly, the dynamic range of the depth map is reshaped.

By reshaping the dynamic range, the authors are able to reflect the different importance of different depths, enabling dynamic range allocation. For ROI coding, the JPEG2000 is used driven by an edge detector to avoid artifacts on the edges.

In [19], edge detection followed by image-based compression is proposed.

The proposed compression scheme rests on the common assumption that depth maps are usually made by a set of smooth surfaces separated by sharp edges between them.

The first task is the segmentation of the depth map using edge detection. Segmented data are then compressed "using a predictor-corrector scheme using samples". In the second task both the original depth map and its segmented version are subsampled and the difference is compressed as a JPEG2000 lossless image. The next task of the algorithm is the construction of a prediction of the original depth map from its subsampled version and the segmented data exploiting 3D clues. Finally the residuals between the prediction and the actual depth map are computed and lossy compressed in JPEG2000.

The results exhibit noticeable improvement over JPEG 2000 and demonstrate suitability of the proposed compression to image warping applications. The proposed method manages to preserve the depth discontinuities and outperforms state of the art codecs at all rates.

Depth images are typically piece-wise smooth, meaning that they are characterized by large smooth or smoothy changing areas associated to the object's surfaces, and sharp edges associated to the transitional areas between objects at different depth levels.

The proposed algorithm in [20] encodes smooth regions using piecewise-linear functions and the boundaries by line segments, considering characteristics of depth images. With a single linear function, one planar surface of the scene, like the ground plane, walls, or small objects can be represented. Hence, a single function can cover areas of variable size in the image. To identify the location of these planar surfaces in the image, a quadtree decomposition which recursively divides the image into squares of different size is employed. In some cases, the depth image within one square can be approximated with a single linear approximation. If no suitable approximation can be determined for the square, it is subdivided into four smaller squares. Additionally to this standard quadtree subdivision, a special coding mode is applied if there are discontinuities in the depth image. To prevent that many small squares are required along a discontinuity, the square is separated along a straight edge into two regions. Each of these two regions is coded with a separate linear function. Consequently, the coding algorithm chooses between three possible modes for each node in the quadtree:
- Mode 1: Approximate the square content with a single linear function: a square platelet;
- Mode 2: Subdivide the square along a straight line into two regions and approximate each region with an independent linear function: a wedged platelet;
- Mode 3: If the previous two modes fail, then subdivide the square into smaller ones and recursively process these squares.

The decision for each coding mode is based on a rate-distortion optimization.

### Generic-based codecs

In this class are considered depth codecs that rely on algorithms for compression of generic type of data (e.g., variable length coding). They are fast and typically implemented with small scripts, while they do not directly exploit depth data properties.

For the purpose of real-time and low complexity compression, Microsoft developed the RVL codec [21]. The approach is to consider each depth map as generic data that can be compressed, ignoring the fact that the depth map is an image. RVL does not thus for instance consider partitioning blocks (i.e. macro block) to compress the depth image.

The proposed "RVL" compression scheme is a mixture of Run length encoding and Variable Length encoding schemes.

Consider a depth image as alternating runs of zero and non-zero values in raster scan order. Without loss of generality, assume that the image begins with a run of zeros (possibly of zero length). Each successive pair of zero and non-zero runs is encoded in order as:
- the number of zeros,
- the number of non-zeros,
- differences (deltas) of successive non-zero pixel values, where the difference for the first pixel in a run of non-zeros is based on the last pixel in the previous run of non-zeros

The number of zeros and non-zeros are positive integers written to the compressed bitstream with a base-8 variable length encoding scheme: starting with the least significant bits, the integer is broken into successive groups of three bits until all set bits are consumed. A fourth continuation bit is added to each group of three indicating whether it is the last group.

This method is extended to accommodate dynamic content in [22].

Temporal RVL (TRVL) first preprocesses the frames of depth streams, then uses RVL to compress the difference between the frame and the previous frame (i.e., delta encoding). In its preprocessing step, TRVL adds change and invalidity tolerance to depth streams based on observations from depth cameras with fixed positions.

Adding change and invalidity tolerance, the preprocessing step temporally stabilizes pixel values by changing a pixel value only when 1) the difference between the fixed value and a measurement is larger than a threshold or 2) when two consecutive measurements failed. The use of the difference between the fixed value and the measurement, instead of the difference between the previous measurement and the current measurement, limits the error from the preprocessing step to the given threshold. Since RVL is designed to efficiently compress running zeros, the temporal redundancy added by the preprocessing step boosts the efficiency of this delta encoding.

### Prior Art

The closest prior art can be considered a combination of the methods presented in [14] and [15]. Specifically, the problem solved by this invention can be seen as a combination of the problems solved by these methods, namely, (i) lossless reduction of bit depth [14], and (ii) reduction of bit depth and bitrate of a source depth image [15].

The corresponding solutions comprise lossless transformation of a higher bit-depth source depth image into a lower bit-depth target depth image using source depth decomposition into source depth sub-ranges [14], and transformation of a higher bit-depth source depth image into a lower bit-depth target depth image using spatial decomposition and quality adaptation per derived spatial sub-region [15], respectively.

However, when these methods are combined, they lead to inefficiencies. For example, combining the technical steps of [14] and [15] in a cascade mode results in multiple integer masks carrying association information between source depth image samples, source depth sub-ranges, and spatial sub-regions. Specifically, in a cascade mode, the technical steps of [14] are first applied to losslessly transform a higher bit-depth source depth image into a first lower bit-depth target depth image (i.e., using first the technical steps of [15] would introduce loss of precision, which defies the problem definition). A source depth sub-ranges integer mask and related metadata are generated to interpret the first target depth image. The first target depth image is then used as an input for the technical steps of [15], which applies lossy transformations to spatial sub-regions of "lower importance" to reduce bitrate, while preserving the precision of spatial sub-regions of "higher importance". The output is a second target depth image of the same bit-depth but lower bitrate due to quality adaptation in determined spatial sub-regions. A spatial sub-regions integer mask and related metadata are generated to interpret the second target depth image.

In conclusion, the higher bit-depth source depth image is represented by the second target depth image, the source depth sub-ranges integer mask, the spatial sub-regions integer mask, and two sets of related metadata, which need to be combined to reconstruct the source depth image.

Similar inefficiencies would be observed if the techniques of [14] and [15] were combined in parallel.

### Disadvantages of Prior art

The prior art consists of a combination of existing methods. The first applies lossless transformation using source depth decomposition into source depth sub-ranges [14], while the second applies transformations for quality adaptation on spatial sub-regions obtained after spatial decomposition [15]. This approach leads to the following issues:
- The technique produces two sequences of integer masks (i.e., videos) to represent the association information between source depth image samples, source depth sub-ranges, and spatial sub-regions (i.e., a source depth sub-ranges integer mask and a spatial sub-region integer mask per source depth image), which results in:
   ∘ Increased computational complexity, since there is a need for two encoder instances and decoder instances to encode and decode them, respectively.
   ∘ Increased bitrate requirements, since a larger number of bits is required to represent, encode, and store corresponding integer masks. These integer masks typically require n bits per sample with n<8, however, in practice 8 bits are being used to represent (i.e., representation bit depth), encode (i.e., encoder bit depth) and store (i.e., memory reads are by default byte-level operations and memory slots are read in 8-bit intervals) them.
- The technique leads to increased bitrate due to metadata redundancies. Two sets of metadata are produced from the two combined methods to interpret the final target depth image sample values. Combining these sets of metadata for reconstructing the source depth image requires additional signalling, which increases the bit usage.

### SUMMARY

Embodiments relate to encoding and decoding image depth data overcoming disadvantages of the prior art.

A 1^{st} embodiment provides a method for transforming a source depth image into a target depth image, the method comprising:
obtaining the source depth image comprising a multitude of source depth image samples each comprising a source depth image sample value being within a source depth image sample bit depth;
determining a plurality of spatial sub-regions of the source depth image such that each of the spatial sub-regions comprises a subset of the source depth image samples, e.g., at least a first spatial sub-region and a second spatial sub-region of the source depth image;
for each of the spatial sub-regions:
   determining a corresponding [1^{st}/2^{nd}/...] source depth sub-range from corresponding source depth image sample values of the corresponding spatial sub-region;
   determining an associated set of source depth bands from the source depth sub-range; and
   applying an associated transformation to each source depth image sample value based on the source depth band it belongs to from the associated set of source depth bands, to transform it into a target depth image sample value of the target depth image that falls within a target depth range; and
wherein each source depth image sample is associated with a source depth band;
wherein, optionally, each source depth image sample is associated with the source depth band and a corresponding spatial sub-region.

A 2^{nd} embodiment provides the method according to the 1^{st} embodiment, further comprising generating metadata, e.g., depth transformation information, indicating at least one of:
(a) the first and/or the second source depth sub-ranges associated with the respective spatial sub-region,
(b) the first and/or the second sets of source depth bands associated with the respective spatial sub-region,
(c) the first and/or the second applied transformation used for the respective sets of source depth bands,
(d) association information indicating the association between source depth image samples, source depth bands and spatial sub-regions, and
(e) association information indicating a transformer used, e.g., in a decoder.

A 3^{rd} embodiment provides the method according to the 1st or 2nd embodiment, further comprising: determining, from a plurality of available transformations, a first transformation for a first set of source depth bands and for the transformation of associated source depth image sample values, wherein, optionally the first transformation is determined based on the bands or the sub-region; and/or
determining, from a plurality of available transformations, a second transformation for a second set of source depth bands and for the transformation of associated source depth image sample values, wherein, optionally the second transformation is determined based on the bands or the sub-region.

A 4^{th} embodiment provides the method according to one of the 1^{st} to 3^{rd} embodiments, further comprising: encoding the target depth image with the target depth image sample bit depth to obtain an encoded target depth image; and/or encapsulating an encoded target depth image and depth transformation information related to the applied transformation.

A 5^{th} embodiment provides the method according to the 4^{th} embodiment, wherein encapsulated data comprising the depth transformation information is signalled either at a bitstream level or at a file format level;
wherein for the bitstream level, the encapsulated data comprising the depth transformation information is signalled using a Supplemental Enhancement Information (SEI) message, an auxiliary picture and/or unused chromatic components of an image plane or
wherein for a file format level, the depth transformation information is signalled in a ISO Base Media File Format (ISOBMFF).

A 6^{th} embodiment provides the method according to the 5^{th} embodiment, wherein for a file format level signalling the depth transformation information is carried using a timed metadata track that is added to the file and is associated to a video track that carries the sequence of target depth images; or
wherein the depth transformation information is partly caried using a box in the trak box structure or sample grouping or entity grouping and partly carried using an auxiliary video track, wherein the method comprises: adding an auxiliary video track to the file and associating the auxiliary video track to a primary video track that carries a sequence of primary pictures such as target depth images.

A 7^{th} embodiment provides the method according to one of the 1^{st} to 6^{th} embodiments, wherein one of a first set of source depth bands associated with the first spatial sub-regions and a second set of source depth bands associated with the second spatial sub-regions is determined across the entire source depth image, such that a concatenation of these source depth bands is equal to the source depth range of the entire source depth image.

An 8^{th} embodiment provides the method according to one of the 1^{st} to 7^{th} embodiments, wherein different transformations are used for the first set of source depth bands of the first spatial sub-region and for the second set of source depth bands of the second spatial sub-region; or wherein a different transformations are used per combination of source depth band and spatial sub-region.

A 9^{th} embodiment provides the method according to one of the 1^{st} to 8^{th} embodiments, wherein association information indicates the association between source depth image samples and the source depth band and the spatial sub-region; wherein the method comprises representing the association information using a composite integer mask, wherein a composite integer mask sample value indicates the source depth band and the spatial sub-region of the co-located source depth image sample; or
wherein association information indicates the association between source depth image samples and the source depth band and the spatial sub-region; wherein the method comprises representing the association information by using bounding boxes or coordinates in combination with a source depth band integer mask, wherein the bounding boxes or coordinates indicate boundaries of a spatial sub-region, such that the source depth band integer mask sample value indicates the source depth band of the co-located source depth image sample.

A 10^{th} embodiment provides a method for decoding a depth image, the method comprising:
obtaining encapsulated depth image and depth transformation information;
parsing the depth transformation information comprising at least one of:
   (a) the first and/or the second source depth sub-ranges associated with the respective spatial sub-region,
   (b) the first and/or the second sets of source depth bands associated with the respective spatial sub-region,
   (c) the first and/or the second applied transformation used for the respective sets of source depth bands,
   (d) association information indicating the association between source depth image samples, source depth bands and spatial sub-regions, and
   (e) association information indicating a transformer used, e.g., in a decoder,
reconstructing the source depth image from the decoded depth image and the parsed depth transformation information, with the reconstructed source depth image samples taking values from the source depth range.

An 11^{th} embodiment provides non-transitory computer-readable storage medium comprising instructions which, when executed by a computer, cause the computer to carry out the method of any one of the preceding claims.

A 12^{th} embodiment provides a device comprising a processing unit, wherein the device is configured for executing the method of one the 1^{st} to 9^{th} embodiments.

A 13^{th} embodiment provides data container encapsulating depth data of a scene, the data container comprising metadata for signalling depth transformation information about an association of a source depth image sample with a source depth band and a corresponding spatial sub-region of a depth image.

A 14^{th} embodiment provides a data stream having encoded thereinto depth data of a scene, the data stream comprising:
metadata for signalling depth transformation information about an association of a source depth image sample with a source depth band and a corresponding spatial sub-region of a depth image.

A 15^{th} embodiment provides a device comprising a processing unit, wherein the device is configured for executing the method of the 10^{th} embodiment.

### BRIEF DESCRIPTION OF THE DRAWINGS

The drawings are explanatory and serve to explain the present disclosure, and are not to be construed to limit the present disclosure to the illustrated embodiments.
Fig. 1 shows depth values in a depth image in a modified from [2];
Fig. 2 shows a depth image, with each depth value represented as a different shade of grey (left) and a colour image (right) showing the same model;
Fig. 3 shows Azure Kinect depth and colour cameras position and coordinate system as known from [6];
Fig. 4 shows Azure Kinect depth and colour cameras field-of-view as known from [7];
Fig. 5 shows Azure Kinect Sensor SDK image transformations as known from [8];
Fig. 6a-c shows an RGBD image from a computer generated image as known from [9];
Fig. 7a shows an extension of MPEG video codecs handling depth data as known from [10];
Fig. 7b shows on its left side an original depth image of D435, in its center a colorized depth image with JPG compression, and on its right side a recovered depth image from colorized and JPG compressed depth;
Fig. 8 shows a schematic representation of an encoding pipeline as known from [13];
Fig. 9 shows a schematic representation of a diagram for handling a source depth image as known from [14];
Fig. 10 shows a schematic representation of a diagram for handling a source depth image as known from [15];
Fig. 11 shows a system diagram of a representative application scenario for real-time transmission of a depth video from a local to a remote user, which involves capturing, encoding, storing, transmitting, receiving, and decoding steps;
Fig. 12 shows an updated system diagram per the invention, introducing two new steps, pre-encoding and post-decoding;
Fig. 13 shows an illustration of a key idea of the invention;
Fig. 14a-c show a 12-bits source depth image (Fig. 14a), the 5-bit composite integer mask (Fig. 14b), and the 8-bit target depth image (Fig. 14c), wherein the latter two can be used to reconstruct the former.
Fig. 15a-c show the 12-bits source depth image (Fig. 15a), the 12-bits reconstructed source depth image (Fig. 15b), and an error map obtained as the absolute value of their difference (Fig. 15c) ;
Fig. 16 shows an ISOBMFF file with a timed metadata track carrying the depth transformation information;
Fig. 17 shows an ISOBMFF file with an auxiliary video track associated to a primary video track;
Fig. 18 shows an ISOBMFF file with an auxiliary video track carrying the depth transformation information;
Fig. 19 shows an ISOBMFF file with an auxiliary video track and a timed metadata track carrying the depth transformation information; and
Fig. 20 is a block diagram illustrating an electronic device 900 according to embodiments of the present disclosure.

### DETAILED DESCRIPTION OF THE INVENTION

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Embodiments of the present disclosure are now described above with reference to a first spatial sub-region and a second spatial sub-region of a source depth image. However, the present disclosure is not limited to such embodiments. In accordance with other embodiments more than two spatial sub-region of the source depth image may be determined. In other words, according to embodiments, a plurality of spatial sub-regions of the source depth image is determined such that each of the spatial sub-regions comprises a subset of the source depth image samples.

### Application scenario

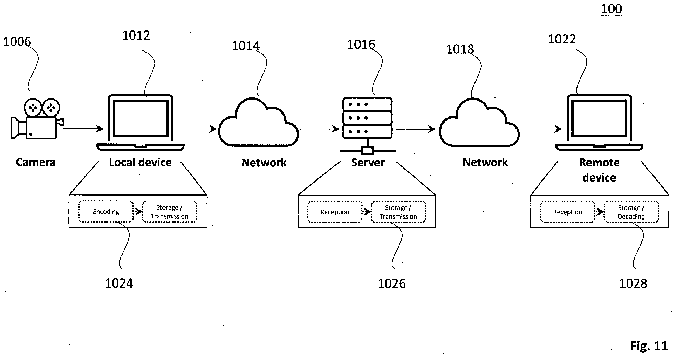

Fig. 11 shows a schematic block diagram of a system of a representative application scenario for real-time transmission of a depth video from a local device 1012 to a remote user 1022, which involves capturing 1006, encoding 1024, storing 1026, transmission via networks 1014/1018, receiving respectively and decoding steps 1028. The server 1016 may provide the received encoded data back to the local device 1012 or to the remote device 1022 or a different device.

A representative application scenario for the invention is live streaming of depth video. In this example, presented in Fig. 11, a depth camera is attached to the local device to capture a live depth video. The depth video is encoded in real-time to save bitrate, potentially stored locally, and transmitted over network to a server. The server potentially stores the encoded depth video for future access on demand and transmits it over network to a remote device, where the depth video is received, potentially stored, and decoded before passed over to an application. Other variants of this example may include:
1. Conventional RGB videos could be additionally captured, stored, and streamed together with the depth video.
2. The depth and/or RGB videos could be processed and/or transcoded at the server.
3. The depth and/or RGB videos could be already captured (i.e., video on demand instead of live streaming).

### Use cases and applications

This section is not mean to be exhaustive and simply shows examples of use cases and applications where depth data are stored and transmitted. Specifically, as part of these applications, depth data may be locally or remotely stored, may be delivered to the edge or a server for processing purposes, or may be streamed to a remote user.

Depth data may be used by an object detection method to detect object. Object detection is a computer technology for the automatic identification of objects that belong to a certain class (e.g., humans, animals, cars, buildings). Object detection is important in a number of applications, such as pedestrian detection, facial detection, and object localization.

Depth data may be used by an object tracking method to track objects. Object tracking is a computer technology for the automatic detection and tracking of objects typically in space (i.e., positions within video frames) and time (i.e., movements across video frames). Object tracking is important in a number of applications, such as autonomous driving, surveillance, retail applications, and XR applications, among others.

Depth data may be used to perform human pose estimation. Pose estimation is a computer technology for detecting the position and orientation of a person or an object in texture or depth images. Pose estimation is important in a number of applications, such as surveillance, interactive gaming, and fitness.

Depth data may also be used in scene (or 3D) reconstruction. Scene reconstruction is important in a number of applications, such as XR experiences, robotic mapping, and spatial computing. Depth images may be used for scene reconstruction.

Depth data may also be used for automatic navigation. Depth data provide the topology of the surrounding scene, enabling enhanced detection capabilities and more comprehensive understanding. Depth data can be used for obstacle detection, collision prevention, and accurate environment mapping, to allow improved navigation and safety.

Depth data may also be used to enable visual effects and interactivity with colour images or videos. Having access to the topology of a captured scene, visual effects such as slicing, refocusing, varying depth of field, lighting adjustment, and weather manipulation can be easily performed with high realism. Moreover, interactivity functionalities that enhance the engagement of the user with the content, such as object placement, distance measurement, and collision detection can be implemented in a straightforward manner [21].

Depth data may also be used for immersive visualization. In these scenarios, volumetric content can be employed and consumed in various ways. There are different manners to represent volumetric content or creating the effect of perceiving volumetric content (i.e., sense of depth), which depends on the type of screen. One way to represent volumetric content is by RGBD images. An example of a display in this category is the Looking Glass Portrait [22] for which the RGBD format is one of the recommended options as described in the documentation [23]. One way to perceive volumetric content is to display a stereo view i.e., a pair of separate views, one for the left eye and one for the right eye. In this category falls 3D TV video, which enables the perception of volumetric content (i.e., sense of depth) from one perspective. In 3D TV video, input data correspond to a single viewpoint and often comprise a depth image and a colour image that are used to synthesize a stereo view [9]. In the same category falls the free viewpoint video, where the user is able to choose the perspective to view the scene. In free viewpoint video, the number of perspectives is virtually infinite (i.e., the user can choose any viewpoint within a continuous range) and, hence, input data often correspond to more than one viewpoint. Nevertheless, the synthesis of a new viewpoint from available ones often relies to depth images and colour images, similarly to the 3D TV [24].

Depth data may also be used for remote rendering. Rendering complex 3D objects can be computationally intensive. One approach to display such content on lightweight devices is to connect them to a rendering node over network that contains a heavy workstation and performs the actual rendering in real-time. In such a scenario, the result of the rendering for the current perspective of a user may be streamed back in an RGBD format. From an RGBD video, it is possible to create a stereo view. Note that some services may decide to stream back to the user the left and right views explicitly. However, in this case, the inter-view distance would be baked in and targeted to this user and device. Providing an RGBD video allows flexibility, and a device-agnostic solution, since the stereo view would be generated on the user side based on the device characteristics and user profile (e.g., interpupillary distance).

### Technical problem solved by the solution

This invention pertains to the domain of depth image representation and coding. The problem solved by this invention is the reduction of bit depth and bitrate, with lossless reduction of bit depth in specific regions of a source depth image.

Depth images are used in a number of applications, as presented in section "Use cases and applications". In these applications, among others, there is need for compression to reduce bitrate for storage or transmission of depth images. Deployed image/video coding infrastructure typically supports up to 10 or 12 bits, which is lower than the 16 bits that are most often used by depth images (e.g., ARCore [3], Intel RealSense D400 series [4], and Microsoft Azure Kinect [5]). Therefore, there is a need for solutions that assist in encoding higher bit-depth depth images using lower bit-depth infrastructure. Additionally, since only specific regions or scene components of a depth image are often relevant for an application, it is important to be able to preserve the corresponding sample values in a lossless manner. Current methods involve lossless transformation of the entire source depth image [14], or transformations for quality adaptation per spatial sub-region of the source depth image [15]. However, these methods do not fully address the specific problem in hand, while combining them results in increased overhead in terms of bits usage and computational complexity, as presented in section "Disadvantages of Prior art".

The key idea of this invention is to transform a higher bit-depth source depth image into a lower bit-depth target depth image using spatial and source depth decomposition. Spatial decomposition divides the image into spatial sub-regions, while source depth decomposition into source depth bands enables lossless transformation or quality adaptation within each spatial sub-region. The lower bit-depth target depth image, combined with generated metadata, enables the reconstruction of a version of the higher bit-depth source depth image.

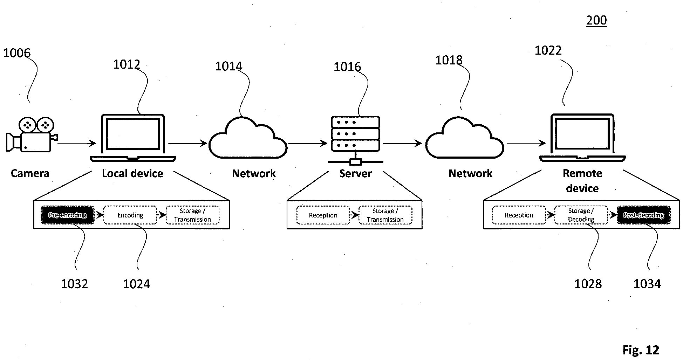

Fig. 12 shows an updated system diagram per the invention, introducing two new steps that are annotated with red colour.

The solution proposed by this invention can be implemented by introducing a pre-encoding and a post-decoding step in the existing pipeline of Fig. 11, highlighted with red colour in Fig. 12. At the local device, the pre-encoding step is introduced to: (a) determine spatial sub-regions, (b) determine a source depth sub-range per spatial sub-region, (c) determine a set of source depth bands per source depth sub-range, (d) determine a transformation per set of source depth bands, (e) transform the source depth image sample values to target depth image samples, (f) associate the source depth image samples with a combination of source depth band and a spatial sub-region, and (g) generate metadata. The lower bit-depth target depth image is encoded and together with the associated metadata are encapsulated and transmitted. At the remote device, the encapsulated data are received, the lower bit-depth target depth image is decoded, and the associated metadata are parsed. The post-decoding step is introduced to reconstruct a version of the higher bit-depth source depth image from the decoded target depth image and the parsed associated metadata. Note that the pre-encoding step doesn't interfere with the encoding process, and the post-decoding step doesn't interfere with the decoding process. The technical effects of the solution are presented in section "Beneficial effects of the solution".

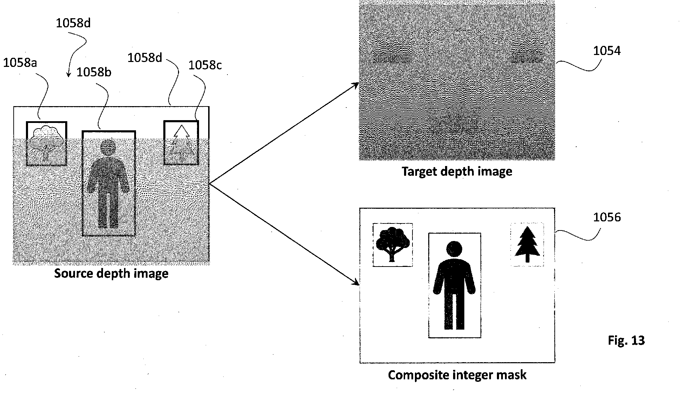

A graphic illustration of the key idea is presented in Fig. 13.

Fig. 13 shows an illustration of the key idea of this invention. A higher bit-depth source depth image 1052 is represented by a lower bit-depth target depth image 1054 and a composite integer mask 1056. The higher bit-depth source depth image 1052 is decomposed into non-overlapping spatial sub-regions 1058a-d, indicated by bounding boxes. Each spatial sub-region has a source depth sub-range, determined by the corresponding source depth image sample values, which is divided into source depth bands. A transformation function is applied to each source depth image sample value according to the combination of source depth band and spatial sub-region, resulting in a corresponding lower bit-depth target depth image sample value in the target depth image. The composite integer mask 1056 indicates the association information between source depth image samples and combinations of a source depth band and a spatial sub-region. In this example, one source depth band is determined for the spatial sub-region 1058d, and two source depth bands are determined for the spatial sub-regions 1058b-d annotated with different shades in the composite integer mask. Note that the colour map between the source depth image and the target depth image is shared, with black and white indicating 0 and the maximum sample value of the source depth image, respectively. This explains the smaller range of gray shades in the target depth image, which represents the narrower target depth range.

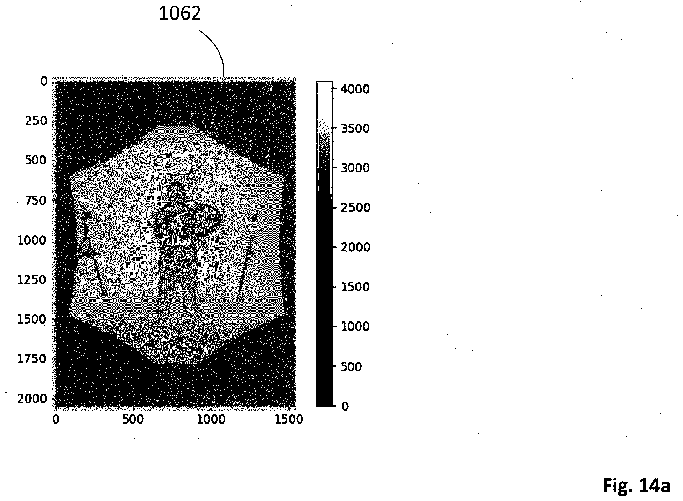

Fig. 14a-c depict a real-life application example of this invention. In this example, the source depth image, shown Fig. 14a, has a bit depth equal to 12 (i.e., [0, 4095]). The overlayed bounding box 1062 indicates the boarders of two non-overlapping spatial sub-regions (i.e., the source depth image samples contained within the bounding box correspond to the first spatial sub-region, while the remaining source depth image samples correspond to the second spatial sub-region). Each spatial sub-region has a corresponding source depth sub-range, with the first being [0, 3763] and the second being [0, 3830] in this example. The source depth sub-range of each spatial sub-region is divided into source depth bands, with the source depth bands of the first and the second spatial sub-region having a length equal to 256 and 1024, resulting in a total of 15 and 4 source depth bands, respectively.

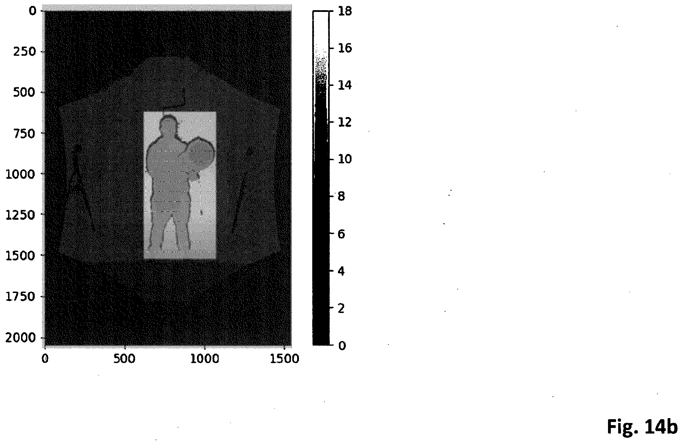

The composite integer mask, shown in the Fig. 14b, is used to indicate the association information between source depth image samples and combinations of source depth bands and spatial sub-regions. A total of 19 indexes is used to cover all possible combinations, which can be represented by 5 bits. Note that, in this example, further optimizations could be obtained by considering only the indexes that are in use (i.e., not all 15 source depth bands are used in the first spatial sub-region).

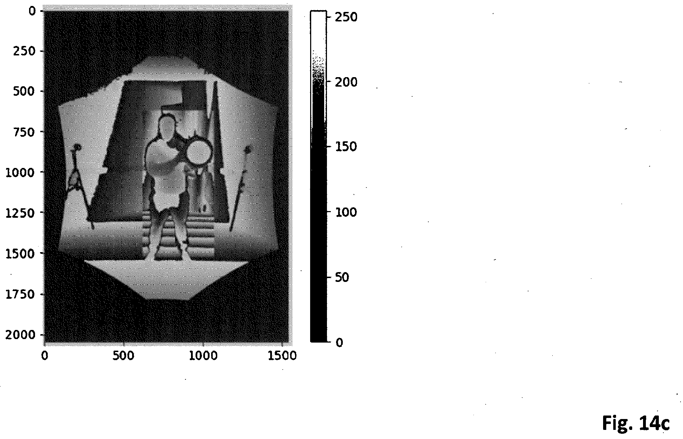

The target depth image, shown in the Fig. 14c, has a precision of 8 bits. A lossless transformation is applied to the source depth image sample values that belong to each of the 15 source depth bands of the first spatial sub-region; specifically, shifting is applied, with the transformed target depth image sample values belonging to the target depth range [0, 255]. A lossy transformation is applied to the source depth image sample values that belong to each of the 4 source depth bands of the second spatial sub-region; specifically, quantization with quantization step equal to 4 is applied, with the transformed target depth image sample values belonging to the target depth range [0,.255].

Fig. 11 shows the 12-bits source depth image (Fig. 11a), the 5-bit composite integer mask (11b), and the 8-bit target depth image (11c). The latter two can be used to reconstruct the former.

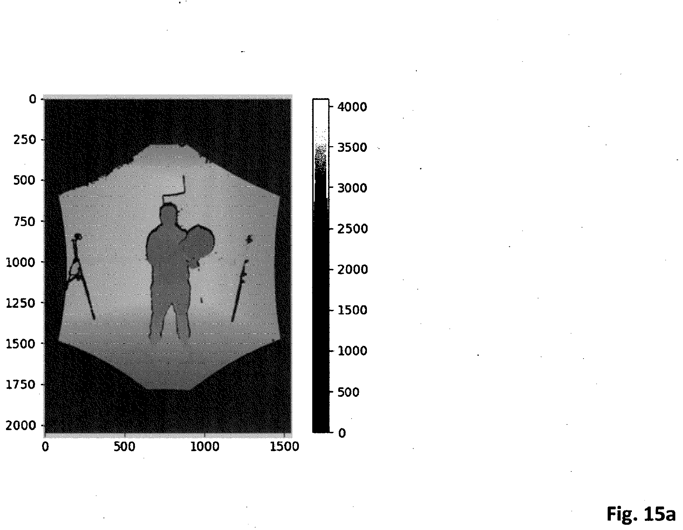

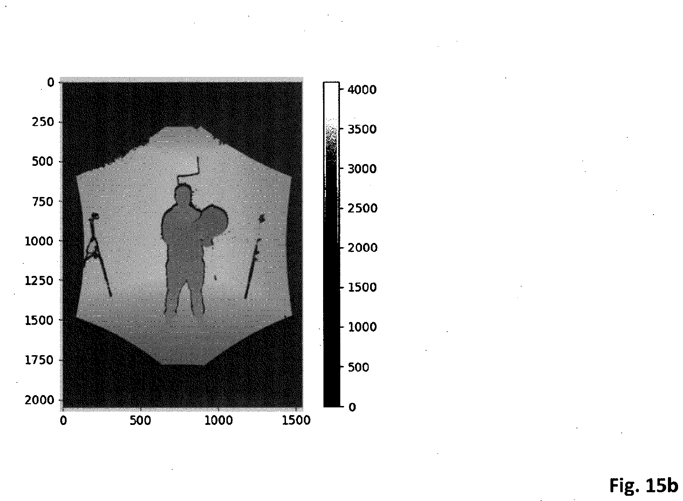

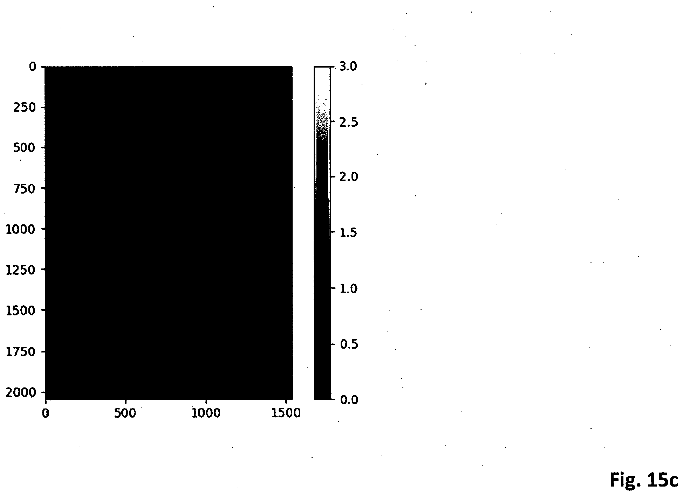

The reconstructed source depth image, shown in Fig. 15b, has a bit depth equal to 12 and is obtained after combining the target depth image, the composite integer mask and associated metadata. Due to the lossy transformation applied to the second spatial sub-region, the corresponding reconstructed source depth image sample values are subject to precision loss. The source depth image and an error map indicating the absolute difference of sample errors are shown on Fig. 15a and Fig. 15c.

Fig. 12 shows the 12-bits source depth image (Fig. 12a), the 12-bits reconstructed source depth image (Fig. 15b), and an error map obtained as the absolute value of their difference (Fig. 15c).

In this example, no encoding is performed.

### Technical description of the solution

### Steps

1. Obtaining a source depth image with sample values that belong to a source depth range and are represented by a source depth image sample bit depth.
2. Determining two non-overlapping spatial sub-regions whose concatenation is equal to the entire source depth image.
3. Transforming the source depth image into a target depth image, as follows:
   a. For the first spatial sub-region:
      i. Determine a first source depth sub-range from corresponding source depth image sample values;
      ii. Determine a first set of non-overlapping, contiguous source depth bands, such that the concatenation of all source depth bands is equal to the first source depth sub-range;
      iii. Determine a first transformation for the first set of source depth bands; and
      iv. Apply the first transformation to each source depth image sample value based on the source depth band it belongs to from the first set, to transform it into a target depth image sample value that falls within a target depth range, and is represented by a target depth image sample bit depth.
   b. For the second spatial sub-region:
      i. Determine a second source depth sub-range from corresponding source depth image sample values;
      ii. Determine a second set of non-overlapping, contiguous source depth bands, such that the concatenation of all source depth bands is equal to the second source depth sub-range;
      iii. Determine a second transformation for the second set of source depth bands; and
      iv. Apply the second transformation to each source depth image sample value based on the source depth band it belongs to from the second set, to transform it into a target depth image sample value that falls within the target depth range, and is represented by the target depth image sample bit depth.
4. Associating each source depth image sample with a combination of a source depth band and a spatial sub-region, wherein the combination comprises a source depth band from the first set and the first spatial sub-region, or a source depth band from the second set and the second spatial sub-region.
5. Generating metadata, namely depth transformation information, comprising (a) the first source depth sub-range and the second source depth sub-range, (b) the first set of source depth bands and the second set of source depth bands, (c) the first transformation and the second transformation, and (d) the association information between source depth image samples and combinations of a source depth band and a spatial sub-region.
6. Encoding the target depth image under the target depth image sample bit depth.
7. Encapsulating the encoded target depth image and the depth transformation information.

With regard to the first transform applied in step 3.a.iv) an example transformation in the first spatial sub-region could be linear scaling. Assuming a first source depth band [0-255] and a second source depth band [256-511], different equations may be used to map them to the target depth range e.g., [0-100]. Eq. 1: $T 1 = \left(x/255\right) * 100$ Eq. 2: $T 2 = \left(\left(x-256\right)/255\right) * 100$

A similar consideration applies to the second transform.

With regard to step 4, it is noted that this step could precede the steps 3.X.iv. In fact, in the exemplary code provided herein, the association information may be used to apply the transformations. The choice of their order may be implementation-specific.

### Source depth image

### Note 1 Capture of source depth image

In step 1, the basic embodiment assumes that a source depth image is obtained from physical sensors, virtual depth cameras, or Al models, in real or simulated environments. In other embodiments, a source depth image could be obtained from different depth representations (e.g., raw depth data). In such embodiments, conversion from the original depth representation format to the source depth image may be required. Such embodiments may use extra technical step(s). The source depth image obtained after such embodiments should be used in subsequent technical steps.

### Note 2 Transformations on raw depth data

In step 1, the basic embodiment assumes that a source depth image contains raw depth data at the original precision, as captured or estimated by the source. In other embodiments, a source depth image could be obtained after uniform or non-uniform quantization of the raw depth data, or after applying a reciprocal function to the raw depth data (e.g., 1/depth_value to maintain higher precision for near depth values and lower precision for far depth values), or after applying some other processing or function. In such embodiments, the source depth image sample values may be subject to precision loss with respect to the raw depth data. Such embodiments may use extra technical step(s). The source depth image obtained after such embodiments should be used in subsequent technical steps.

### Spatial sub-regions

### Note 3 Determination of spatial sub-regions

In step 2, the basic embodiment assumes that the spatial sub-regions are determined, without specifying how. There are various ways to determine the spatial sub-regions. For example, by using pre-determined spatial sub-regions, or by applying some type of processing to every source depth image (e.g., image segmentation, depth-based segmentation, object or face or human detection, semantical analysis, etc.). Other alternatives could be devised. In case the spatial sub-regions are pre-determined, each source depth image sample should be associated only with a source depth band (step 4). Such embodiments may use extra technical step(s).

### Note 4 More than two spatial sub-regions

In step 2, the basic embodiment assumes two spatial sub-regions. In other embodiments, one or more than two spatial sub-regions could be determined. Such embodiments use straightforward adjustments of the technical steps to account for the exact number of determined spatial sub-regions.

### Note 5 Spatial sub-regions not covering the source depth image

In step 2, the basic embodiment assumes that the concatenation of spatial sub-regions is equal to the entire source depth image. In other embodiments, the concatenation of spatial sub-regions could be a subset of the entire source depth image. In such embodiments, either (a) an extra spatial sub-region is implied as the remaining portion of the source depth image, excluding the concatenation of the determined spatial sub-regions, and a default or pre-determined transformation could be applied to every source depth image sample value that falls within this extra spatial sub-region based on the corresponding source depth band it belongs to, or (b) the remaining portion of the source depth image, excluding the concatenation of the determined spatial sub-regions, could be cropped. Such embodiments may use extra technical step(s). If (b) option is chosen, the source depth image obtained after cropping should be used in subsequent technical steps.

### Note 6 Overlapping spatial sub-regions

In step 2, the basic embodiment assumes that the spatial sub-regions are non-overlapping. In other embodiments, overlapping spatial sub-regions could be determined. In such embodiments, additional logic could be included to decide in which spatial sub-region a source depth image sample should be assigned to, when its position falls into more than one spatial sub-regions. Such embodiments may use extra technical step(s).

### Source depth bands

### Note 7 Non-contiguous source depth bands

In step 3, the basic embodiment assumes that the first and second sets of source depth bands determined in the first and second spatial sub-regions, respectively, are contiguous. In other embodiments, the source depth bands in either the first or the second set could be non-contiguous, and their boundaries could be adjusted based on the source depth image sample values that are present (i.e., some values within a source depth sub-range may not be used by the source depth image sample values). Such embodiments may use extra technical step(s).

### Note 8 Number of source depth bands

In step 3, the basic embodiment assumes that more than one source depth band is contained in both the first and second sets determined in the first and second spatial sub-regions, respectively. In other embodiments, a single source depth band could be defined in either the first or the second set, which would be identical to the first or the second source depth sub-range, respectively. More generally, a different number of source depth bands, equal to or greater than one, could be determined in a different spatial sub-region of the source depth image.

### Note 9 Length of source depth bands

In step 3, the basic embodiment assumes that the source depth bands in both the first and second sets, determined in the first and second spatial sub-regions, respectively, have the same length. In other embodiments, the source depth bands in either the first or the second set could have different lengths. Additionally, the source depth bands across the first and second sets could have the same or different lengths.

### Note 10 Range of concatenated source depth bands

In step 3, the basic embodiment assumes that the concatenation of non-overlapping, contiguous source depth bands in both the first and second sets, determined in the first and second spatial sub-regions, respectively, is equal to the first and second source depth sub-ranges. In other embodiments, the concatenation of the source depth bands in either the first or the second set could cover (i.e., be a superset of) the first or the second source depth sub-range, respectively, without necessarily being equal to it.

### Note 11 Determination of source depth bands

In step 3, the basic embodiment assumes that the source depth bands in both the first and second sets are determined in the first and second spatial sub-regions, respectively, without specifying how. There are various ways to determine a set of source depth bands in a spatial sub-region. For example, by using pre-defined source depth bands, or by using only the minimum and maximum values of the source depth sub-range of the spatial sub-region, or by using the distribution of source depth image sample values within the spatial sub-region. Other alternatives could be devised. Such embodiments may use extra technical step(s).

### Note 12 Source depth bands across source depth image

In step 3, the basic embodiment assumes that the first and second sets of source depth bands are determined in the first and second spatial sub-regions, such that the concatenation of the first and second sets of source depth bands is equal to the first and second depth sub-ranges, respectively. In other embodiments, one set of source depth bands could be determined across the entire source depth image, such that the concatenation of these source depth bands is equal to the source depth range of the entire source depth image. In such embodiments, the first and second source depth sub-ranges, and the first and second sets of source depth bands may be excluded from the depth transformation information. Moreover, additional metadata may be included into the depth transformation information to signal the single set of source depth bands. Such embodiments may use adjustments of technical step(s).

### Transformation

### Note 13 Transformation function per spatial sub-region

In step 3, the basic embodiment assumes that the first transformation determined for the first set of source depth bands is lossless, and the second transformation determined for the second set of source depth bands is lossy, in the first and second spatial sub-regions, respectively. In other embodiments, any transformation function of any type (lossless or lossy) could be determined for either the first or the second set of source depth bands, in the first and second spatial sub-regions, respectively. Examples of lossless and lossy transformation functions include: (1) shifting, wherein the source depth image sample values are losslessly shifted to a target depth range, (2) bit shifting, wherein the binary representations of the source depth image sample values are shifted by a specified number of bits to the target depth range, (3) scaling (potentially with rounding), wherein the source depth image sample values are mapped to the target depth range, (4) quantization, wherein the source depth image sample values are quantized to the target depth range using a quantization step, (5) padding, wherein the source depth image sample values are mapped to a constant value. Other alternative linear or non-linear transformation functions could also be used.

### Note 14 Transformation per combination of source depth band and spatial sub-region

In step 3, the basic embodiment assumes that a first transformation is determined for the first set of source depth bands in the first spatial sub-region, and a second transformation is determined for the second set of source depth bands in the second spatial sub-region. In other terms, a different transformation is determined per spatial sub-region. In this case, the same transformation is applied to all source depth image sample values within a spatial sub-region, regardless of the source depth band they belong to. In other embodiments, a different transformation could be determined per combination of source depth band and spatial sub-region. In these cases, the same transformation is applied to all source depth image sample values that fall within a specific combination of a spatial sub-region and a source depth band. In such embodiments, additional metadata may be included in the depth transformation information to signal the transformation per combination of source depth band and spatial sub-region. Such embodiments may use adjustments of technical step(s).

### Note 15 Different target depth range/image bit depth and source depth range/image bit depth

In step 3, the basic embodiment assumes that the target depth range and target depth image bit depth, obtained after transformation, are smaller than the source depth range and source depth image bit depth, respectively. In other embodiments, the target depth range and target depth image bit depth could be the same as, or larger than, the source depth range and source depth image bit depth, respectively. However, having a larger target depth range or bit depth is generally less practically useful.

### Note 16 Different target depth sub-ranges

In step 3, the basic embodiment assumes that after applying the first or second transformation to each source depth image sample value in the first or second spatial sub-region, respectively, the corresponding target depth image sample values fall within the target depth range. In other embodiments, a specific target depth sub-range could be determined for the target depth image sample values obtained after applying a transformation per spatial sub-region, or per combination of source depth band and spatial sub-region. In such embodiments, additional metadata may be included into the depth transformation information to signal the target depth sub-range for the transformation per spatial sub-region or per combination of source depth band and spatial sub-region.

### Association information

### Note 17 Different representations of association information

In step 4, the basic embodiment assumes that the association information between source depth image samples and combinations of a source depth band and a spatial sub-region is represented using a composite integer mask, where a composite integer mask sample value indicates the source depth band and the spatial sub-region of the co-located source depth image sample. In other embodiments, the association information between source depth image samples and combinations of a source depth band and a spatial sub-region could be represented differently. For example, by using bounding boxes or coordinates in combination with a source depth band integer mask, where the bounding boxes or coordinates indicate the boundaries of a spatial sub-region, and the source depth band integer mask sample value indicates the source depth band of the co-located source depth image sample. Other alternatives could be devised. Such embodiments may use extra technical step(s).

### Static or dynamic information

### Note 18 Static or dynamic spatial sub-regions and/or source depth bands and/or composite integer masks

In steps 2, 3, and 4, the basic embodiment assumes that the spatial sub-regions, source depth bands, and composite integer mask are determined per source depth image, respectively. In other embodiments, the same spatial sub-regions, source depth bands, and/or composite integer mask can be used for more than one source depth images. For example, the spatial sub-regions, source depth bands, and/or composite integer mask could be determined and used for a single depth frame, an entire depth sequence, or anything in-between. In such embodiments, common metadata could be signalled at a higher metadata level (e.g., segment, group-of-pictures, or video header level) for spatial sub-regions and/or source depth bands, while additional metadata may be included into the depth transformation information to signal the receiving device to store a composite integer mask for more than one depth frame. Such embodiments may use extra technical step(s).

### Post-processing

### Note 19 Processing on source depth image and/or target depth image and/or composite integer mask

In steps 1, 4, and 6, the basic embodiment assumes that no processing is applied to the source depth image, the composite integer mask, and the target depth image, respectively. In other embodiments, further processing could be applied. For example, image processing operations such as downscaling or cropping could be used to reduce bitrate. In such embodiments, additional metadata may be included into the depth transformation information to signal how the downscaling is conducted, or which rows/columns are cropped from the source depth image, the target depth image, and/or the composite integer mask, respectively. Moreover, additional metadata may be included into the depth transformation information to signal the spatial association between the processed source depth image, the processed composite integer mask, and the processed target depth image. Such embodiments may use extra technical step(s). The source depth image obtained after such embodiments should be used in subsequent technical steps.

### Spatial association

### Note 20 Different spatial association between source depth image and composite integer mask and/or target depth image

In steps 4 and 6, the basic embodiment assumes that the composite integer mask and the target depth image have the same resolution and a 1-1 spatial association with the source depth image, respectively. In other embodiments, a different spatial association could be determined. For example, the source depth image could be split into N regions, with each region associated with a composite integer mask sample (i.e., in this case, the composite integer mask contains N samples) and/or a target depth image sample (i.e., in this case, the target depth image contains N samples), respectively. Other spatial association alternatives could be devised. In such embodiments, additional metadata may be included into the depth transformation information to signal the spatial association of the composite integer mask and/or the target depth image with the source depth image, respectively, and potentially the spatial association between the composite integer mask and the target depth image. Such embodiments may use extra technical step(s).

### Note 21 Spatial alignment between source depth image, composite integer mask, and target depth image

In the basic embodiment, the source depth image, the composite integer mask, and the target depth image have the same resolution, with a 1-1 spatial association between the source depth image and the target depth image, as well as between the source depth image and the composite integer mask. This results in spatial alignment (i.e., same resolution and 1-1 spatial association) between the target depth image and the composite integer mask. Therefore, there is no need for an explicit description of the spatial association between them in the depth transformation information, which is used to reconstruct the source depth image at the receiving device. In other embodiments, there might be no spatial alignment between the source depth image and the target depth image, or the source depth image and the composite integer mask (e.g., due to further processing, as described in Note 19), which results in no spatial alignment between the target depth image and the composite integer mask. In such embodiments, there are at least two alternatives to achieve spatial alignment between these two: (a) metadata that describe (i) the spatial association of the target depth image with the source depth image, (ii) the spatial association of the composite integer mask with the source depth image, and (iii) potential processing steps for the target depth image and the composite integer mask, which allow for the recovery of corresponding versions that have spatial alignment with the source depth image, and in turn, between them; (b) dedicated metadata that describe the spatial association between the target depth image and the composite integer mask. Some of the NOTES above cover at least partially both alternatives. Such embodiments may use extra technical step(s).

### Metadata

### Note 22 Signalling explicit number of source depth bands and spatial sub-regions

In step 5, the basic embodiment assumes that the number of spatial sub-regions and the number of source depth bands in the first and second sets, determined in the first and second spatial sub-regions, respectively, are implied and therefore, not signalled in the depth transformation information. In other embodiments, either or both of these numbers could be explicitly signalled in the depth transformation information.

### Note 23 Signalling explicit targe depth range

In step 5, the basic embodiment assumes that the target depth range is obtained from existing signalling (e.g., Sequence Parameter Sets) and therefore, not signalled in the generated depth transformation information. In other embodiments, the target depth range could be additionally signalled in the depth transformation information.

### Note 24 Signalling transformation functions

In step 5, the basic embodiment assumes that the first and second transformations determined for the first and second sets of source depth bands in the first and second spatial sub-regions, respectively, are signalled using pre-defined tables, potentially including additional transformation-specific parameters. Other alternatives could be devised.

### Note 25 Signalling source depth bands

In step 5, the basic embodiment assumes that the first and second sets of source depth bands determined in the first and second spatial sub-region are signalled in the depth transformation information using the length of the source depth bands for the first and second sets. These lengths, combined with the first and second source depth sub-ranges, can indicate non-overlapping, contiguous, equal-length source depth bands for the first and second sets, respectively. In other embodiments, the number of the source depth bands for the first and second sets could be used instead. In some other embodiments, arrays, lists, or other data structures storing start and end boundaries could be used to indicate overlapping or non-overlapping, contiguous or non-contiguous, equal- or varying-length source depth bands for the first and/or second sets. Other alternatives could be devised.

### Note 26 Signalling representation information for combinations of a source depth band and a spatial sub-region

In step 5, the basic embodiment assumes that the association information between source depth image samples and combinations of a source depth band and a spatial sub-region includes representation information for these combinations. For example, when using a composite integer mask, the representation information consists of a map that associates each composite integer mask sample value with the corresponding combination of a source depth band and a spatial sub-region (i.e., mapping a value to a pair of values). When using bounding boxes or coordinates in combination with a source depth band integer mask, the representation information consists of the bounding boxes or coordinates and a map that associates each source depth band integer mask sample value with the corresponding source depth band (i.e., mapping a value to a value). These maps could be pre-determined (i.e., limited flexibility), or signalled in the depth transformation information (i.e., in the general case) and could be stored using an array, dictionary, look-up table, symbol table, or any other suitable data structure.

### Encoding

### Note 27 Different encoding per spatial sub-region

In step 6, the basic embodiment assumes that the entire target depth image is encoded with the same encoding configurations. In other embodiments, different encoding configurations could be used for different spatial sub-regions, potentially, by using appropriately selected encoding tools (e.g., tiles). Such embodiments may use extra technical step(s).

### Transmission

### Note 28 Different transmission of encapsulated data

After step 7, the encapsulated data can then be transmitted over the network either as a stream (after establishing a session) or as a file (potentially in parts), or may be stored on the device as a file.

### Exemplary code:

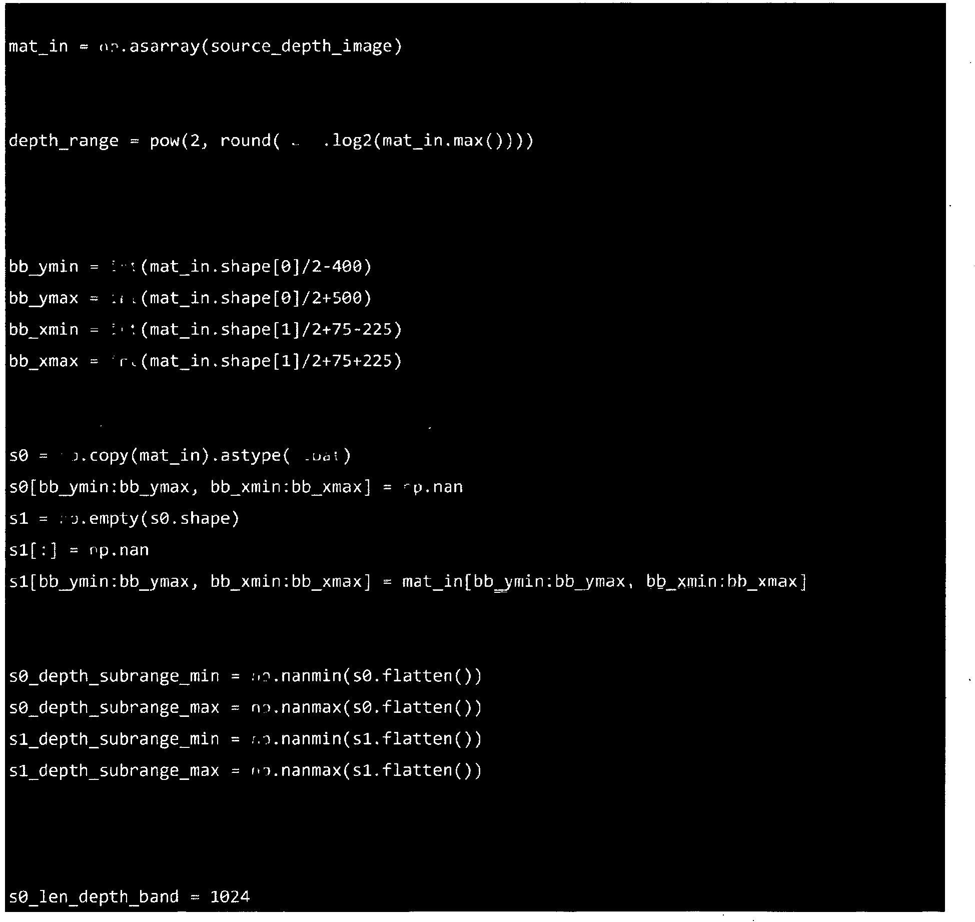

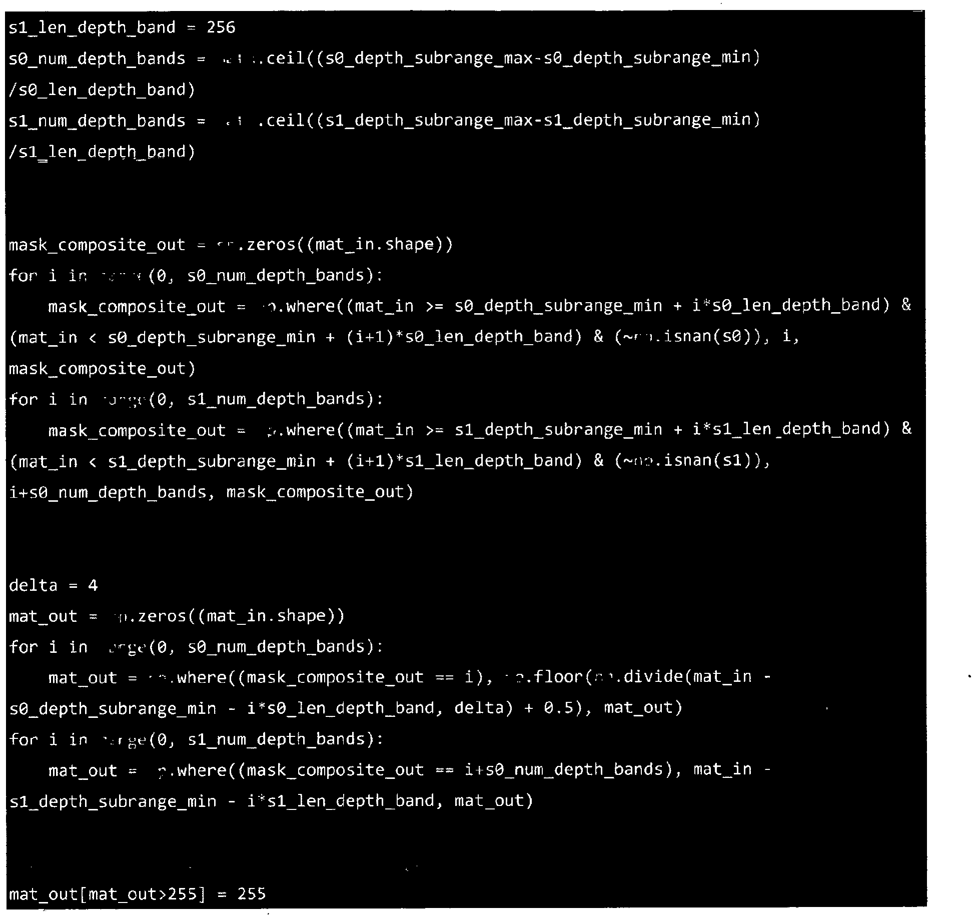

A receiving device:
1. Obtaining the encapsulated depth image and depth transformation information.
2. Decoding the depth image.
3. Parsing the depth transformation information comprising (a) the first source depth sub-range and the second source depth sub-range, (b) the first set of source depth bands and the second set of source depth bands, (c) the first transformation and the second transformation, and (d) the association information between source depth image samples and combinations of a source depth band and a spatial sub-region.
4. Reconstructing the source depth image from the decoded depth image and the parsed depth transformation information, with the reconstructed source depth image samples taking values from the source depth range.

### Exemplary code:

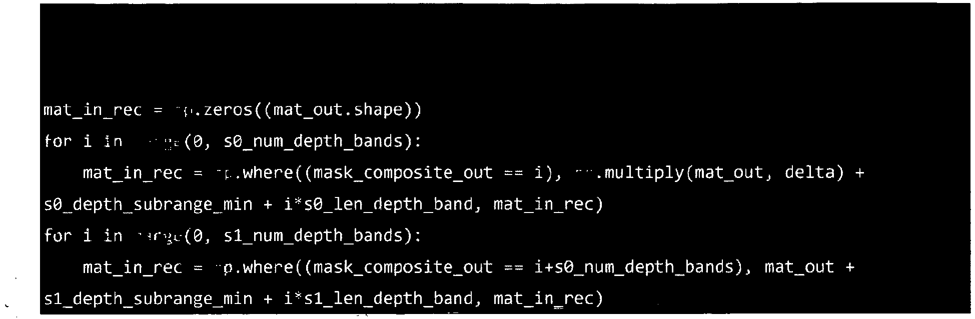

The steps for both capturing and receiving devices were crafted considering a single depth image that corresponds to a specific time instance. The same steps can be applied on depth videos instead of depth images, by treating each frame of the video as an image.

### Embodiments

The disclosure provisions several signalling methods:
- As metadata in video bitstream;
- As metadata in a file format but not inside the video bitstream.

For video bitstream, the metadata are signalled using new Supplemental Enhancement Information (SEI) messages, auxiliary pictures, or unused chromatic components of an image plane. For file format, the metadata are signalled using new structures in the ISO Base Media File Format (ISOBMFF) [28]. These are examples of in-video bitstream and file format signalling that rely on referenced standards; however, other standards could be used as basis for implementing this invention.

The following assumptions are made:
- Our embodiments consider a single depth video (i.e., without an accompanied RGB video).
- Our embodiments assume that the target depth image is encoded as a conventional video frame. Therefore, only the depth transformation information to reconstruct the source depth image, is considered.
- Our embodiments assume that the association information between source depth image samples and combinations of a source depth band and a spatial sub-region is represented by an integer mask (i.e., composite integer mask).
- Our embodiments assume 1-1 spatial association between the source depth image and the composite integer mask.
- Our embodiments assume the same resolution for the source depth image and the target depth image.
- Our embodiments assume 1-1 spatial association between the target depth image and the source depth image.

### Signalling in video stream

For the purpose of the invention, the depth transformation information may need to be transmitted along with the video signal from the encoding step (e.g. in a studio, on a server) up to the receiver (e.g. the TV receiver, a smartphone, a tablet, a HMD glasses, etc.). Therefore, it may be signalled as part of the video bitstream's metadata.

For illustrating the transport of the information, the following is an example based on the NAL-based video coding standards which are currently H.264/AVC [29], H.265/HEVC [30], MPEG-5 EVC [31] and H.266/VVC [32]. Similar signalling could be achieved for other coding standards such as AV1 [33] or the upcoming AV2 standard.

A Network Abstraction Layer (NAL) unit is the encapsulation method for a video bitstream. A NAL unit is composed of a header and a payload. The concept of NAL unit is identical for those 4 standards although the definition of the NAL header may vary slightly between H.264/AVC [29], H.265/HEVC [30], MPEG-5 EVC [31] and H.266/VVC [32].

For the remaining of this section, the signalling will take the H.266/VVC [32] standard as a basis for illustration purposes. Similar embodiments can be drafted for H.264/AVC [29], H.265/HEVC [30], or MPEG-5 EVC [31].

Table 1 is the general syntax of a NAL unit as defined in H.266/VVC [32]. The formatting of those tables follows the conventions defined in H.266/VVC [31]. Please refer to section 7.1 (Method of specifying syntax in tabular form) and section 7.2 (Specification of syntax functions and descriptors) in H.266/VVC [32].

**Table 1 - General NAL unit syntax as defined in H.266/VVC [32].**

| | |
|---|---|
| *nal_unit(NumBytesInNalUnit) {* | ***Descriptor*** |
| *nal_unit_header()* | |
| *NumBvtesInRbsp = 0* | |
| *for(i = 2; i < NumBytesInNalUnit; i++ )* | |
| *if( i + 2 < NumBytesInNalUnit && next_bits( 24 )* = *= 0x000003 ) {* | |
| ***rbsp_byte**[ NumBytesInRbsp++ ]* | *b(8)* |
| ***rbsp_byte**[ NumBytesInRbsp++ ]* | *b(8)* |
| *i += 2* | |
| ***emulation_prevention_three_byte*** /** equal to 0x03 **/ | *f(8)* |
| *} else* | |
| ***rbsp_byte**[ NumBytesInRbsp++ ]* | *b(8)* |
| *}* | |

The signalling consists in defining a new type of Supplemental Enhancement Information (SEI) message. SEI are metadata carried in a video bitstream of H.264/AVC [29], H.265/HEVC [30], MPEG-5 EVC [31] or H.266/VVC [32] that can support the decoding of the video (e.g., buffering period SEI) or that can be useful for some processing after decoding (e.g., colour remapping SEI). Each SEI type defines the syntax of the payload as well as the semantic of the data so that the implementor can make use of the signalled SEI if they want to support it. A SEI message is carried in the video bitstream as a NAL unit and the type of SEI is expressed by a payload type. In H.266/VVC [32], the payload types are defined in clause D.2.1 (General SEI payload syntax). For signalling the depth transformation information, one may thus define a new payload type, e.g. payload type '134' as part of the current reserved range of values as in Table 2.

**Table 2 - Modification of general SEI payload syntax in H.266/VVC [12].**

| | |
|---|---|
| *sei_payload( payloadType, payloadSize) {* | ***Descriptor*** |
| *if( nal_unit_type = = PREFIX_SEI_NUT)* | |
| *if( payloadType =* = *0* ) | |
| *buffering_period( payloadSize )* | |
| *else if( payloadType =* = *1 )* | |
| *pic_timing( payloadSize )* | |
| ... | |
| *else if( payloadType = = 133 )* | |
| *scalable_nesting( payloadSize )* | |
| else if( payloadType = = 134 ) | |
| depth transformation info( payloadSize ) | |
| *else* /** Specified in Rec. ITU- T H.274* \| *ISO*/*IEC 23002-7 **/ | |
| *reserved message(payloadSize )* | |
| ... | |
| } | |

### Carriage of composite integer mask using a SEI message

One method to carry the composite integer mask is to use SEI messages. This constitutes a single-layer bitstream method.

In this method, new SEI messages that specify the depth transformation information are defined.

In the present case, a single or multiple SEI messages are defined to carry the composite integer mask and the additional metadata needed to interpret the composite integer mask sample values. A video sequence carries the sequence of target depth images.

The following embodiments present examples of such SEI messages. Other embodiments could be crafted following the same logic.

### Embodiment 1 of carriage of composite integer mask using a SEI message

In this embodiment:
- A video sequence carries the sequence of target depth images; and
- A single SEI message carries the composite integer mask together with the metadata needed to interpret the composite integer mask sample values.

The resolutions of the composite integer mask and the target depth image are the same; hence, the Sequence Parameter Set (SPS) signalling is used to retrieve the width and height parameters (i.e., no need to specify them in the depth_transformation_info SEI message).

### Syntax

A new payload type may be defined as in Table 3.

**Table 3 - Signalling of the composite integer mask together with metadata needed to interpret the composite integer mask sample values in a SEI message.**

| | |
|---|---|
| depth_transformation_info( payloadSize ) { | **Descriptor** |
| **si_cancel_flag** | u(1) |
| if( ! si_cancel_flag) { | |
| **si_num_spatial_subregions,** | u(8) |
| **si_num_source_depth_bands** | |
| for(k=0; k < si num spatial subregions; k++) { | |
| **si_source_depth_subrange_min**[ k ] | u(16) |
| **si_source_depth_subrange_max**[ k ] | u(16) |
| **si_transformation_type**[ k ] | u(4) |
| for(m=0; m < si_num_source_depth_bands; { | |
| **si_combination_value**[ k ][ m ] | u(8) |
| if(si*_*transformation*_*type[ k ] == 0) | |
| **si***_***offset**[ k ][ m ] | u(16) |
| if(si_transformation_type[ k ] == 1) | |
| **si_bit_shift**[ k ][ m ] | u(v) |
| if(si*_*transformation*_*type[ k ] == 2) { | |
| **si_target_depth_subrange_min**[ k ][ m ] | u(16) |
| **si_target_depth_subrange_max**[ k ][ m ] | u(16) |
| } | |
| if(si transformation type[ k ] = 3) { | |
| **si_quantization_step_value**[ k ][ m ] | u(v) |
| **si_quantizer_type**[ k ][ m ] | u(2) |
| } | |
| if(si_transformation_type[ k ] == 4) | |
| **si_constant_value**[ k ][ m ] | u(16) |
| } | |
| } | |
| for(i=0; i < **pps_pic_height**_**in**_**luma**_**samples;** i++) | |
| for(j=0; i < **pps*_*pic*_*width*_*in*_*luma*_*samples**; i++) | |
| **si_mask_value**[ i ][ j ] | u(v) |
| } | |
| } | |

### Semantics

The depth_transformation_info SEI message provides information that describes the number of spatial sub-regions, the number of source depth bands, the source depth sub-range per spatial sub-region, the transformation per spatial sub-region, the representations of the combinations of a source depth band and a spatial sub-region, transformation-specific parameters per source depth band, and the composite integer mask in the video. The depth_transformation_info SEI message is defined up to a frame.
**si_cancel_flag** equal to 1 indicates that the SEI message cancels the persistence of any previous
depth_transformation_info SEI message. When equal to 0, the information that should be considered follows.
**si_num_spatial_subregions** specifies the number of the spatial sub-regions.
**si_num_source_depth_bands** specifies the number of the source depth bands of every spatial sub-region.
The length of the source depth bands of the k-th spatial sub-region is obtained as:
len_depth_band[ k ] = ceil{(si_source_depth_subrange_max[ k ] -
si_source_depth_subrange_min[ k ]) / si_num_source_depth_bands}.
The minimum and maximum values of the m-th source depth band of the k-th spatial sub-region are obtained as:
   m_depth_band_min[ k ] = si_source_depth_subrange_min[ k ] + m * len_depth_band[ k ]
   m_depth_band_max[ k ] = si_source_depth_subrange_min[ k ] + (m+1) * len_depth_band[ k ] -1
**si_source_depth_subrange_min**[ k ] specifies the minimum value of the source depth sub-range of the k-th spatial sub-region.
**si_source_depth_subrange_max**[ k ] specifies the maximum value of the source depth sub-range of the k-th spatial sub-region.
**si_transformation_type**[ k ] specifies the transformation applied to every source depth band of the k-th spatial sub-region. Transformation-specific parameters for the m-th source depth band are specified in Table .
**si_combination_value**[ k ][ m ] specifies the value used to represent the m-th source depth band of the k-th spatial sub-region.

**Table 4 - Definition of si_transformation_type.**

| **si_transfor mation_typ e** | **Definition** |
|---|---|
| 0 | [Shifting] Each decoded target depth image sample value of the m-th source depth band of the k-th spatial sub-region is shifted, as follows: |
| | |
| | y = x + si_offset[ k ][ m ] |
| | |
| | where x is the decoded target depth image sample value, and y is the reconstructed source depth image sample value. |
| | |
| | If y is greater than m_depth_band_max, it is clipped. |
| 1 | [Bit shifting] The binary representation of each target depth image sample value of the m-th source depth band of the k-th spatial sub-region is left-shifted, as follows: |
| | |
| | y = x << si_bit_shift[ k ][ m ] |
| | |
| | where x is the binary representation of the decoded target depth image sample value, and y is the reconstructed source depth image sample value. |
| | |
| | If y is greater than m_depth_band_max, it is clipped. |
| 2 | [Scaling] Each decoded target depth image sample value of the m-th source depth band of the k-th spatial sub-region is scaled, as follows: |
| | |
| | y = m_depth_band_min[ k ] + ((x - si_target_depth_subrange_min[ k ]) * (m_depth_band_max[ k ] - m_depth_band_min[ k ])) / (si_target_depth_subrange_max[ k ] - si_target_depth_subrange_min[ k ]) |
| | |
| | where x is the decoded target depth image sample value, and y is the reconstructed source depth image sample value. |
| | |
| | If y is greater than m_depth_band_max, it is clipped. |
| 3 | [Quantization] Each decoded target depth image sample value of the m-th source depth band of the k-th spatial sub-region is inverse quantized, as follows: |
| | |
| | y = x * si_quantization_step_value[ k ] + m_depth_band_min[ k ], if si_quantizer_type[ k ] = 0 |
| | |
| | y = (x + 0.5) * si_quantization_step_value[ k ] + m_depth_band_min[ k ], if si_quantizer_type[ k ] = 1 |
| | |
| | where x is the decoded target depth image sample value, and y is the reconstructed source depth image sample value. |
| | |
| | If y is greater than m_depth_band_max, it is clipped. |
| 4 | [Padding] Each decoded target depth image sample value of the m-th source depth band of the k-th spatial sub-region is set equal to a constant value, as follows: |
| | |
| | y = si_constant_value[ k ][ m ]. |
| Other values | Reserved for future use |

| | |
|---|---|
| NOTE Other operations (e.g., rounding), or different equations could be used to reconstruct the source depth image sample values y. | |

With regard to **si_transformation_type** in the table above [31], it is stated that any quantizer can be decomposed into two distinct stages, which can be referred to as the classification stage (or forward quantization stage) and the reconstruction stage (or inverse quantization stage), where the classification stage maps the input value to an integer quantization index k and the reconstruction stage maps the index k to the reconstruction value that is the output approximation of the input value.
**si_offset**[ k ][ m ] specifies the offset to shift decoded target depth image sample values of the m-th source depth band of the k-th spatial sub-region to obtain reconstructed source depth image sample values, when **si_transformation_type**[ k ] is equal to 0. When not specified, the si_offset[ k ] is set equal to 0.
**si_bit_shift**[ k ][ m ] specifies the number of bits to left-shift the binary representations of the target depth image sample values of the m-th source depth band of the k-th spatial sub-region to obtain reconstructed source depth image sample values, when **si_transformation_type**[ k ] is equal to 1. When not specified, the si_bit_shift[ k ] is set equal to 0.
**si_target_depth_subrange_min**[ k ][ m ] specifies the minimum value of the target depth sub-range of the m-th source depth band of the k-th spatial sub-region, when si_transformation_type[ k ] is equal to 2. When not specified, the si_target_depth_subrange_min[ k ][ m ] is set equal to the minimum of the target depth image sample values that correspond to the m-th source depth band of the k-th spatial sub-region (i.e., si_mask_value[ i ][ j ] = si_combination_value[ k ][ m ]).
**si_target_depth_subrange_max**[ k ][ m ] specifies the maximum value of the target depth sub-range of the m-th source depth band of the k-th spatial sub-region, when si_transformation_type[ k ] is equal to 2. When not specified, the si_target_depth_subrange_max[ k ][ m ] is set equal to the maximum of the target depth image sample values that correspond to the m-th source depth band of the k-th spatial sub-region (i.e., si_mask_value[ i ][ j ] = si_combination_value[ k ][ m ]).
**si_quantization_step_value**[ k ][ m ] specifies the quantization step to inverse quantize decoded target depth image sample values of the m-th source depth band of the k-th spatial sub-region to obtain reconstructed source depth image sample values, when si_transformation_type[ k ] is equal to 3. When si_transformation_type[ k ] is equal to 3, the si_quantization_step_value[ k ][ m ] should be specified.
**si_quantizer_type**[ k ][ m ] specifies the type of quantizer used for quantization, when si_transformation_type[ k ] is equal to 3. When equal to 0, the si_quantizer_type[ k ][ m ] is a mid-treat uniform quantizer. When equal to 1, the si_quantizer_type[ k ][ m ] is a mid-riser uniform quantizer. When not specified, si_quantizer_type[ k ][ m ] is set equal to 0. Other values are reserved for future use of other types of quantizers.
**si_constant_value**[ k ][ m ] specifies the value in which the decoded target depth image samples of the m-th source depth band of the k-th spatial sub-region are mapped to, when si_transformation_type[ k ] is equal to 4. When not specified, the si_constant_value[ k ][ m ] is set equal to 0.
**si_mask_value**[ i ][ j ] specifies the index that represents the m-th source depth band of the k-th spatial sub-region for the collocated source depth image sample.

### Embodiment 2 of carriage of composite integer mask using a SEI message

In this embodiment:
- A video sequence carries the sequence of target depth images;
- A first SEI message carries the metadata needed to interpret the composite integer mask sample values; and
- A second SEI message carries the composite integer mask.

The resolutions of the composite integer mask and the target depth image are the same; hence, the Sequence Parameter Set (SPS) signalling is used to retrieve the width and height parameters (i.e., no need to specify them in the depth_transformation_info SEI message).

### Syntax

New payload types may be defined as in Table 5 and Table 6.

**Table 5 - Signalling of the metadata needed to interpret the composite integer mask sample values in a first SEI message.**

| | |
|---|---|
| depth transformation info( payloadSize ) { | **Descriptor** |
| **si_cancel_flag** | u(1) |
| if( ! si cancel flag) { | |
| **si_num_spatial_subregions** | u(8) |
| for(k=0; k < si num spatial subregions; k++) { | |
| **si_len***_***source_depth_bands**[ k ] | u(16) |
| **si***_***num***_***source***_***depth_bands**[ k ] | u(16) |
| **si_source_depth_subrange_min**[ k ] | u(16) |
| **si_source_depth_subrange_max**[ k ] | u(16) |
| **si_transformation_type**[ k ] | u(4) |
| for(m=0; m < si_num source depth_bands[ k ]; m++) { | |
| **si_combination_value**[ k ][ m ] | u(8) |
| if(si_transformation_type[ k ] == 0) | |
| **si_offset**[ k ][ m ] | u(16) |
| if(si*_*transformation*_*type[ k ] == 1) | |
| **si_bit_shift**[ k ][ m ] | u(v) |
| if(si*_*transformation*_*type[ k ] == 2) { | |
| **si_target_depth_subrange_min**[ k ][ m ] | u(16) |
| **si_target_depth_subrange_max**[ k ][ m ] | u(16) |
| } | |
| if(si*_*transformation*_*type[ k ] == 3) { | |
| **si_quantization**_**step***_***value**[ k ][ m ] | u(v) |
| **si_quantizer_type**[ k ][ m ] | u(2) |
| } | |
| if(si_transformation_type[ k ] = 4) | |
| **si_constant**_**value**[ k ][ m ] | u(16) |
| } | |
| } | |
| } | |
| } | |

**Table 6 - Signalling of the composite integer mask in a second SEI message.**

| | |
|---|---|
| mask_info( payloadSize ) { | **Descriptor** |
| for(i=0; i < **pps_pic_height_in_luma_samples;** i++) | |
| for(j=0; j < **pps*_*pic*_*width*_*in*_*luma*_*samples;** j++) | |
| **si_mask_value**[ i ][ j ] | u(v) |
| } | |

### Semantics

The depth_transformation_info SEI message provides information that describes the number of spatial sub-regions, the length of source depth bands per spatial sub-region, the number of source depth bands per spatial sub-region, the source depth sub-range per spatial sub-region, the transformation per spatial sub-region, the representations of the combinations of a source depth band and a spatial sub-region, and transformation-specific parameters per source depth band in the video. The mask_info SEI message provides information that describes the composite integer mask in the video. Both the depth_transformation_info and the mask_info SEI messages are defined up to a frame.
**si_cancel_flag** equal to 1 indicates that the SEI message cancels the persistence of any previous depth_transformation_info SEI message. When equal to 0, the information that should be considered follows.
**si_num_spatial_subregions** specifies the number of the spatial sub-regions.
**si_len_source_depth_bands**[ k ] specifies the length of the source depth bands of the k-th spatial sub-region.
**si_num_source_depth_bands**[ k ] specifies the number of the source depth bands of the k-th spatial sub-region, which is obtained as follows:
si_num_source_depth_bands[ k ] = ceil{(si_source_depth_subrange_max[ k ] - si_source_depth_subrange_min[ k ]) / si_len_source_depth_bands[ k ]}.
The minimum and maximum values of the m-th source depth band of the k-th spatial sub-region are obtained as follows:
m_depth_band_min[ k ] = si_source_depth_subrange_min[ k ] + m * **si_len_source_depth_bands**[ k ]
m_depth_band_max[ k ] = si_source_depth_subrange_min[ k ] + (m+1) * **si_len_source_depth_bands**[ k ] - 1.
**si_source_depth_subrange_min**[ k ] specifies the minimum value of the source depth sub-range of the k-th spatial sub-region.
**si_source_depth_subrange_max**[ k ] specifies the maximum value of the source depth sub-range of the k-th spatial sub-region.
**si_transformation_type**[ k ] specifies the transformation applied to every source depth band of the k-th spatial sub-region. Transformation-specific parameters for the m-th source depth band are specified in Table .
**si_combination_value[** k ][ m ] specifies the value used to represent the m-th source depth band of the k-th spatial sub-region.

**Table 7 - Definition of si_transformation_type.**

| **si_transfor mation_typ e** | **Definition** |
|---|---|
| 0 | [Shifting] Each decoded target depth image sample value of the m-th source depth band of the k-th spatial sub-region is shifted, as follows: |
| | |
| | y = x + si_offset[ k ][ m ] |
| | |
| | where x is the decoded target depth image sample value, and y is the reconstructed source depth image sample value. |
| | |
| | If y is greater than m_depth_band_max, it is clipped. |
| 1 | [Bit shifting] The binary representation of each target depth image sample value of the m-th source depth band of the k-th spatial sub-region is left-shifted, as follows: |
| | |
| | y = x << si_bit_shift[ k ][ m ] |
| | |
| | where x is the binary representation of the decoded target depth image sample value, and y is the reconstructed source depth image sample value. |
| | |
| | If y is greater than m_depth_band_max, it is clipped. |
| 2 | [Scaling] Each decoded target depth image sample value of the m-th source depth band of the k-th spatial sub-region is scaled, as follows: |
| | |
| | y = m_depth_band_min[ k ] + ((x - si_target_depth_subrange_min[ k ]) * (m_depth_band_max[ k ] - m_depth_band_min[ k ])) / (si_target_depth_subrange_max[ k ] - si_target_depth_subrange_min[ k ]) |
| | |
| | where x is the decoded target depth image sample value, and y is the reconstructed source depth image sample value. |
| | |
| | If y is greater than m_depth_band_max, it is clipped. |
| 3 | [Quantization] Each decoded target depth image sample value of the m-th source depth band of the k-th spatial sub-region is inverse quantized, as follows: |
| | |
| | y = x * si_quantization_step_value[ k ] + m_depth_band_min[ k], if si_quantizer_type[ k ] = 0 |
| | |
| | y = (x + 0.5) * si_quantization_step_value[ k ] + m_depth_band_min[ k], if si_quantizer_type[ k ] = 1 |
| | |
| | where x is the decoded target depth image sample value, and y is the reconstructed source depth image sample value. |
| | |
| | If y is greater than m_depth_band_max, it is clipped. |
| 4 | [Padding] Each decoded target depth image sample value of the m-th source depth band of the k-th spatial sub-region is set equal to a constant value, as follows: |
| | |
| | y = si_constant_value[ k ][ m ]. |
| Other values | Reserved for future use |

| | |
|---|---|
| NOTE Other operations (e.g., rounding), or different equations could be used to reconstruct the source depth image sample values y. | |

**si_offset**[ k][ m ] specifies the offset to shift decoded target depth image sample values of the m-th source depth band of the k-th spatial sub-region to obtain reconstructed source depth image sample values, when si_transformation_type[ k ] is equal to 0. When not specified, the si_offset[ k ] is set equal to 0.
**si_bit_shift**[ k ][ m ] specifies the number of bits to left-shift the binary representations of the target depth image sample values of the m-th source depth band of the k-th spatial sub-region to obtain reconstructed source depth image sample values, when si_transformation_type[ k ] is equal to 1. When not specified, the si_bit_shift[ k ] is set equal to 0.
**si_target_depth_subrange_min**[ k ][ m ] specifies the minimum value of the target depth sub-range of the m-th source depth band of the k-th spatial sub-region, when si_transformation_type[ k ] is equal to 2. When not specified, the si_target_depth_subrange_min[ k ][ m ] is set equal to the minimum of the target depth image sample values that correspond to the m-th source depth band of the k-th spatial sub-region (i.e., si_mask_value[ i ][ j ] = si_combination_value[ k ][ m ]).
**si_target_depth_subrange_max**[ k ][ m ] specifies the maximum value of the target depth sub-range of the m-th source depth band of the k-th spatial sub-region, when si_transformation_type[ k ] is equal to 2. When not specified, the si_target_depth_subrange_max[ k ][ m ] is set equal to the maximum of the target depth image sample values that correspond to the m-th source depth band of the k-th spatial sub-region (i.e., si_mask_value[ i ][ j ] = si_combination_value[ k ][ m ]).
**si_quantization_step_value**[ k ][ m ] specifies the quantization step to inverse quantize decoded target depth image sample values of the m-th source depth band of the k-th spatial sub-region to obtain reconstructed source depth image sample values, when si_transformation_type[ k ] is equal to 3. When si_transformation_type[ k ] is equal to 3, the si_quantization_step_value[ k ][ m ] should be specified.
**si_quantizer_type**[ k ][ m ] specifies the type of quantizer used for quantization, when si_transformation_type[ k ] is equal to 3. When equal to 0, the si_quantizer_type[ k ][ m ] is a mid-treat uniform quantizer. When equal to 1, the si_quantizer_type[ k ][ m ] is a mid-riser uniform quantizer. When not specified, si_quantizer_type[ k ][ m ] is set equal to 0. Other values are reserved for future use of other types of quantizers.
**si_constant_value**[ k ][ m ] specifies the value in which the decoded target depth image samples of the m-th source depth band of the k-th spatial sub-region are mapped to, when si_transformation_type[ k ] is equal to 4. When not specified, the si_constant_value[ k ][ m ] is set equal to 0.
**si_mask_value**[ i ][ j ] specifies the index that represents the m-th source depth band of the k-th spatial sub-region for the collocated source depth image sample.

### Embodiment 3 of carriage of composite integer mask using a SEI message

In this embodiment:
- A video sequence carries the sequence of target depth images;
- A first SEI message carries the metadata needed to interpret the composite integer mask sample values; and
- A second SEI message carries the composite integer mask.

The resolutions of the composite integer mask and the target depth image are different; hence, the width and height parameters should be specified (i.e., in the second SEI message). A rescaling operation is then needed, and possibly corresponding signalling to indicate how this rescaling operation is performed, such that the rescaled combined integer mask resolution matches the one of the source depth images.

### Syntax

New payload types may be defined as in Table 8 and Table 9.

**Table 2 - Signalling of the metadata needed to interpret the composite integer mask sample values in a first SEI message.**

| | |
|---|---|
| depth_transformation_info( payloadSize ) { | **Descriptor** |
| **si_cancel_flag** | u(1) |
| if( ! si_cancel_flag) { | |
| **si_num_spatial_subregions** | u(8) |
| for(k=0; k < si_num_spatial_subregions; k++) { | |
| **si**_**len_source_depth_bands**[ k ] | u(8) |
| **si_num_source_depth_bands**[ k ] | u(8) |
| **si_source_depth_subrange_min**[ k ] | u(16) |
| **si_source_depth_subrange_max**[ k ] | u(16) |
| for(m=0; m < si_num_source_depth_bands[ k ]; m++) { | |
| **si**_**combination_value**[ k ][ m ] | u(8) |
| **si_source_depth_band_min**[ k ][ m ] | u(16) |
| **si_source_depth_band_max**[ k ][ m ] | u(16) |
| **si_target_depth_subrange_min**[ k ][ m ] | u(16) |
| **si_target_depth_subrange_max**[ k ][ m ] | u(16) |
| **si_transformation_type**[ k ][ m ] | u(4) |
| if(si_transformation_type[ k ][ m ] == 0) | |
| **si_offset**[ k ][ m ] | u(16) |
| if(si transformation_type[ k ][ m ] == 1) | |
| **si_bit_shift**[ k ][ m ] | u(v) |
| if(si_transformation_type[ k ][ m ] == 3) { | |
| **si_quantization_step_value**[ k ][ m ] | u(v) |
| **si_quantizer_type**[ k ][ m ] | u(2) |
| } | |
| if(si_transformation_type[ k ][ m ] == 4) | |
| **si_constant_value**[ k ][ m ] | u(16) |
| } | |
| } | |
| } | |
| } | |

**Table 9 - Signalling of the composite integer mask in a second SEI message.**

| | |
|---|---|
| mask_info( payloadSize ) { | **Descriptor** |
| **mi_mask_height** | u(16) |
| **mi_mask_width** | u(16) |
| for(i=0; i < mi mask_height; i++) | |
| for(j=0; i < mi_mask_width; j++) | |
| **mi_mask_value**[ i ][ j ] | u(v) |
| } | |

### Semantics

The depth_transformation_info SEI message provides information that describes the number of spatial sub-regions, the length of source depth bands per spatial sub-region, the number of source depth bands per spatial sub-region, the source depth sub-range per spatial sub-region, the representations of the combinations of a source depth band and a spatial sub-region, the source depth bands, the target depth sub-ranges, the transformation per combination of source depth band and spatial sub-region, and transformation-specific parameters per source depth band in the video. The mask_info SEI message provides information that describes the width and height of the composite integer mask, and the composite integer mask in the video. Both the depth_transformation_info and the mask_info SEI messages are defined up to a frame.
**si_cancel_flag** equal to 1 indicates that the SEI message cancels the persistence of any previous depth_transformation_info SEI message. When equal to 0, the information that should be considered follows.
**si_num_spatial_subregions** specifies the number of the spatial sub-regions.
**si_len_source_depth_bands**[ k ] specifies the length of the source depth bands of the k-th spatial sub-region.
**si_num_source_depth_bands[** k ] specifies the number of the source depth bands of the k-th spatial sub-region, which is obtained as follows:
si_num_source_depth_bands[ k ] = ceil{(si_source_depth_subrange_max[ k ] - si_source_depth_subrange_min[ k ]) / si_len_source_depth_bands[ k ]}.
**si_source_depth_subrange_min**[ k ] specifies the minimum value of the source depth sub-range of the k-th spatial sub-region.
**si_source_depth_subrange_max**[ k ] specifies the maximum value of the source depth sub-range of the k-th spatial sub-region.
**si_combination_value**[ k ][ m ] specifies the value used to represent the m-th source depth band of the k-th spatial sub-region.
**si_source_depth_band_min**[ k ][ m ] specifies the minimum value of the m-th source depth band of the k-th spatial sub-region.
**si_source_depth_band_max**[ k ][ m ] specifies the maximum value of the m-th source depth band of the k-th spatial sub-region.
**si_target_depth_subrange_min**[ k ][ m ] specifies the minimum value of the target depth sub-range of the m-th source depth band of the k-th spatial sub-region. When not specified, the **si_target_depth_subrange_min**[ k ][ m ] is set equal to the minimum of the target depth image sample values that correspond to the m-th source depth band of the k-th spatial sub-region (i.e., si_mask_value[ i ][ j ] = si_combination_value[ k ][ m ]).
**si_target_depth_subrange_max**[ k ][ m ] specifies the maximum value of the target depth sub-range of the m-th source depth band of the k-th spatial sub-region. When not specified, the si_target_depth_subrange_max[ k ][ m ] is set equal to the maximum of the target depth image sample values that correspond to the m-th source depth band of the k-th spatial sub-region (i.e., si_mask_value[ i ][ j ] = si_combination_value[ k ][ m ]).
**si_transformation_type**[ k ][ m ] specifies the transformation applied to the m-th source depth band of the k-th spatial sub-region, as specified in Table .

**Table 10 - Definition of si_transformation_type.**

| **si_transfo rmation_t ype** | **Definition** |
|---|---|
| 0 | [Shifting] Each decoded target depth image sample value of the m-th source depth band of the k-th spatial sub-region is shifted, as follows: |
| | |
| | y = x + si_offset[ k ][ m ] |
| | |
| | where x is the decoded target depth image sample value, and y is the reconstructed source depth image sample value. |
| | |
| | If y is greater than m_depth_band_max, it is clipped. |
| 1 | [Bit shifting] The binary representation of each target depth image sample value of the m-th source depth band of the k-th spatial sub-region is left-shifted, as follows: |
| | |
| | y = x << si_bit_shift[ k ][ m ] |
| | |
| | where x is the binary representation of the decoded target depth image sample value, and y is the reconstructed source depth image sample value. |
| | |
| | If y is greater than m_depth_band_max, it is clipped. |
| 2 | [Scaling] Each decoded target depth image sample value of the m-th source depth band of the k-th spatial sub-region is scaled, as follows: |
| | |
| | y = si_source_depth_band_min[ k ][ m ] + ((x - si_target_depth_subrange_min[ k ]) * (si_source_depth_band_max[ k ][ m ] - si_source_depth_band_min[ k ][ m ])) / (si_target_depth_subrange_max[ k ][ m ] - si_target_depth_subrange_min[ k ][ m ]) |
| | |
| | where x is the decoded target depth image sample value, and y is the reconstructed source depth image sample value. |
| | |
| | If y is greater than m_depth_band_max, it is clipped. |
| 3 | [Quantization] Each decoded target depth image sample value of the m-th source depth band of the k-th spatial sub-region is inverse quantized, as follows: |
| | |
| | y = x * si_quantization_step_value[ k ] + si_source_depth_band_min[ k ][ m ], if si_quantizer_type[ k ] = 0 |
| | |
| | y = (x + 0.5) * si_quantization_step_value[ k ] + si_source_depth_band_min[ k ][ m ], if si_quantizer_type[ k ] = 1 |
| | |
| | where x is the decoded target depth image sample value, and y is the reconstructed source depth image sample value. |
| | |
| | If y is greater than m_depth_band_max, it is clipped. |
| 4 | [Padding] Each decoded target depth image sample value of the m-th source depth band of the k-th spatial sub-region is set equal to a constant value, as follows: |
| | |
| | y = si_constant_value[ k ][ m ]. |
| Other values | Reserved for future use |

| | |
|---|---|
| NOTE Other operations (e.g., rounding), or different equations could be used to reconstruct the source depth image sample values y. | |

**si_offset**[ k ][ m ] specifies the offset to shift decoded target depth image sample values of the m-th source depth band of the k-th spatial sub-region to obtain reconstructed source depth image sample values, when si_transformation_type[ k ][ m ] is equal to 0. When not specified, the si_offset[ k ] is set equal to 0.
**si_bit_shift**[ k ][ m ] specifies the number of bits to left-shift the binary representations of the target depth image sample values of the m-th source depth band of the k-th spatial sub-region to obtain reconstructed source depth image sample values, when si_transformation_type[ k ][ m ] is equal to 1. When not specified, the si_bit_shift[ k ] is set equal to 0.
**si_quantization_step_value**[ k ][ m ] specifies the quantization step to inverse quantize decoded target depth image sample values of the m-th source depth band of the k-th spatial sub-region to obtain reconstructed source depth image sample values, when si_transformation_type[ k ][ m ] is equal to 3. When si_transformation_type[ k ][ m ] is equal to 3, the si_quantization_step_value[ k ][ m ] should be specified.
**si_quantizer_type**[ k ][ m ] specifies the type of quantizer used for quantization, when si_transformation_type[ k ][ m ] is equal to 3. When equal to 0, the si_quantizer_type[ k ][ m ] is a mid-treat uniform quantizer. When equal to 1, the si_quantizer_type[ k ][ m ] is a mid-riser uniform quantizer. When not specified, si_quantizer_type[ k ][ m ] is set equal to 0. Other values are reserved for future use of other types of quantizers.
**si_constant_value**[ k ][ m ] specifies the value in which the decoded target depth image samples of the m-th source depth band of the k-th spatial sub-region are mapped to, when si_transformation_type[ k ][ m ] is equal to 4. When not specified, the si_constant_value[ k ][ m ] is set equal to 0.
**mi_mask_height** specifies the height of the integer mask used to associate the source depth image samples with combinations of a source depth band and a spatial sub-region.
**mi_mask_width** specifies the width of the integer mask used to associate the source depth image samples with combinations of a source depth band and a spatial sub-region.
**mi_mask_value**[ i ][ j ] specifies the index that represents the m-th source depth band of the k-th spatial sub-region for the collocated source depth image sample.

### Carriage of composite integer mask using an auxiliary picture

Another method to carry the composite integer mask is to use auxiliary pictures. This constitutes a multi-layer bitstream method.

In this method, a sequence of data is encoded as a sequence of auxiliary pictures, forming an auxiliary layer that is associated to a primary layer. Each auxiliary picture layer is associated with one primary picture layer, and one primary picture layer may be associated with one or more auxiliary picture layers.

In the present case, a sequence of auxiliary pictures carries the sequence of composite integer masks, forming the composite integer mask auxiliary layer. A sequence of primary pictures carries the sequence of target depth images, forming the primary layer that is associated to the auxiliary layer. A new SEI message is also defined to carry the additional metadata needed to interpret the composite integer mask auxiliary picture sample values.

The following embodiment presents in section "Scalability dimension information SEI message" the modifications of the scalability dimension information SEI defined in the Versatile Supplemental Enhancement Information (VSEI) [35] standard section 8.19 (Scalability dimension information SEI message) and referenced by the H.266/VVC [32] standard; note that a similar extension in the scalable H.265/HEVC [30] can be achieved. Moreover, an example of a SEI message is presented in section "Depth transformation information SEI message" to carry the additional metadata needed to interpret the composite integer mask sample values. Other embodiments could be crafted following the same logic.

### Scalability dimension information SEI message

### Syntax

| | |
|---|---|
| *scalability_dimension_info( payloadSize ) {* | ***Descriptor*** |
| **sdi_max_layers_minus1** | *u(6)* |
| **sdi_multiview_info_flag** | *u(1)* |
| **sdi_auxiliary_info_flag** | *u(1)* |
| **if( sdi_multiview_info_flag \| \| sdi_auxiliary_info_flag )** { | |
| ***if( sdi_multiview_info_flag )*** | |
| **sdi_view_id_len_minus1** | *u(4)* |
| ***for( i = 0; i <= sdi_max_layers_minus1; i++ ) {*** | |
| ***sdi_layer_id**[ i ]* | *u(6)* |
| ***if( sdi_multiview_info_flag )*** | |
| ***sdi_view_id_val**[ i ]* | *u(v)* |
| ***if( sdi_auxiliary_info_flag )*** | |
| ***sdi_aux_id**[ i ]* | *u(8)* |
| ***if( sdi_aux_id[ i ] > 0 )** {* | |
| ***sdi_num_associated_primary_layers_minus1**[ i ]* | *u(6)* |
| *f**or( j = 0; j <= sdi_num_associated_primary_layers_minus1[ i ]; j++ )*** | |
| ***sdi_associated_primary_layer_idx**[ i ][ j ]* | *u(6)* |
| *}* | |
| *}* | |
| *}* | |
| } | |
| *}* | |

### Semantics

The scalability_dimension_info SEI message provides the Scalability Dimension Information (SDI) for each layer in the current Coded Video Sequence (CVS), i.e., the CVS containing the SDI SEI message, such as 1) when there may be multiple views, the view ID of each layer; and 2) when there may be auxiliary information (such as depth or alpha) carried by one or more layers, the auxiliary ID of each layer.
*When an SDI SEI message is present in any Access Unit (AU) of a CVS, an SDI SEI message shall be present for the first AU of the CVS. All SDI SEI messages in a CVS shall have the same content.* ... ***sdi_aux_id**[ i ] equal to 0 indicates that the i-th layer in the current CVS does not contain auxiliary pictures. sdi_aux_id[ i ] greater than 0 indicates the type of auxiliary pictures in the i-th layer in the current CVS as specified in Table 15. When sdi auxiliary _info_flag is equal to 0, the value of sdi_aux_id[ i ] is inferred to be equal to 0.*

**Table 15 - Mapping of sdi_aux id[ i ] to the type of auxiliary pictures**

| ***sdi_aux_id[ i ]*** | ***Name*** | ***Type of auxiliary pictures*** |
|---|---|---|
| *1* | *AUX_ALPHA* | *Alpha plane* |
| *2* | *AUX_DEPTH* | *Depth picture* |
| 3 | AUX_COMPOSITE_INTEGER_MASK | Integer mask that describes the association information between source depth image samples and combinations of a source depth band and a spatial sub-region |
| 4..*127* | | *Reserved* |
| *128..159* | | *Unspecified* |
| *160..255* | | *Reserved* |

| | | |
|---|---|---|
| *NOTE 1 The interpretation of auxiliary pictures associated with sdi_aux_id[ i ] in the range of 128 to 159, inclusive, is specified through means other than the sdi_aux_id[ i ] value.* | | |

*sdi_aux_id[ i ] shall be in the range of 0 to 3* when compared to a former interval ranging from 0 to 2, *inclusive, or 128 to 159, inclusive, for bitstreams conforming to this version of this document. Although the value of sdi_aux_id[ i ] shall be in the range of 0 to 3, inclusive, or 128 to 159, inclusive, in this version of this document, decoders shall also allow other values of sdi aux_id[ i ] in the range of 0 to 255, inclusive.*

*If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer. When sdi_aux*_*id[ i ] is equal to 3, the i-th layer is also referred to as a composite integer mask auxiliary layer.*

### Depth transformation information SEI message

NOTE In the following embodiment, the described signalling is following section "Embodiment 2" of *carriage of composite integer mask using a SEI message.* Analogously, the depth transformation information SEI message could be modified accordingly to describe signalling following section "Embodiment 1" of *carriage of composite integer mask using a SEI message* or section "Embodiment 3" of *carriage of composite integer mask using a SEI message.* Other embodiments could also be crafted.

### Embodiment 1 of depth transformation information SEI message

In this embodiment:
- A sequence of auxiliary pictures of type AUX_COMPOSITE_INTEGER_MASK carries the sequence of composite integer masks;
- A sequence of primary pictures carries the sequence of target depth images; and
- A SEI carries the metadata needed to interpret the composite integer mask sample values.

The resolutions of the composite integer mask and the source depth image are the same; hence, the Sequence Parameter Set (SPS) signalling is used to retrieve the width and height parameters (i.e., no need to specify them in the depth_transformation_info SEI message).

### Syntax

**Table 11 - Signalling of the metadata needed to interpret the composite integer mask sample values in a SEI message.**

| | |
|---|---|
| depth_transformation_info( payloadSize ) { | **Descriptor** |
| **si_cancel_flag** | u(1) |
| if( ! si_cancel_flag) { | |
| **si_num_spatial_subregions** | u(8) |
| for(k=0; k < si_num_spatial_subregions; k++) { | |
| **si_len_source_depth_bands**[ k ] | u(16) |
| **si_num_source_depth_bands**[ k ] | u(16) |
| **si_source_depth_subrange_min**[ k ] | u(16) |
| **si_source_depth_subrange_max**[ k ] | u(16) |
| **si_transformation_type**[ k ] | u(4) |
| for(m=0; m < si_num_source_depth_bands[ k ]; m++) { | |
| **si_combination_value**[ k ][ m ] | u(8) |
| if(si_transformation_type[ k ] == 0) | |
| **si_offset**[ k ][ m ] | u(16) |
| if(si_transformation_type[ k ] == 1) | |
| **si_bit_shift** [k ][ m ] | u(v) |
| if(si_transformation_type[ k ] == 2) { | |
| **si_target_depth_subrange_min**[ k ][ m ] | u(16) |
| **si_target_depth_subrange_max**[ k ][ m ] | u(16) |
| } | |
| if(si_transformation_type[ k ] == 3) { | |
| **si_quantization_step_value**[ k ][ m ] | u(v) |
| **si_quantizer_type**[ k ][ m ] | u(2) |
| } | |
| if(si_transformation_type[ k ] = 4) | |
| **si_constant_value**[ k ][ m ] | u(16) |
| } | |
| } | |
| } | |
| } | |

### Semantics

The depth_transformation_info SEI message provides information that describes the number of spatial sub-regions, the source depth sub-range per spatial sub-region, the length of source depth bands per spatial sub-region, the number of source depth bands per spatial sub-region, the transformation per spatial sub-region, the representations of the combinations of a source depth band and a spatial sub-region, and transformation-specific parameters per source depth band in the video. The depth_transformation_info SEI message is defined up to a frame.

The semantics can be found in section "Semantics".

### Signalling in media container (ISOBMFF)

For the purpose of the invention, the depth transformation information may need to be signalled on a higher level, to be obtained before accessing the video bitstream. Therefore, it may be signalled in the file container's metadata.

The proposed signalling is based on ISOBMFF 28 standard, which defines a binary structure for storing media and metadata data. However, similar metadata may be also transmitted in any other file-based (e.g., WebM) or packet-based (e.g., RTP) containers.

To store depth transformation information in a file container, it is important to consider whether the information is static or dynamic, that is whether it varies over time. Below, we provide signalling examples for dynamic metadata, occasionally combined with static metadata.

NOTE The schematic representations of the ISOBMFF files presented in the following sections contain simplifications of the actual box hierarchy.

### Dynamic metadata using the timed metadata track

One method to carry depth transformation information is to use a timed metadata track.

In this method, a timed metadata track is added to the file. The timed metadata track contains a sequence of data, with each data point being a sample of the timed metadata track. Timed metadata tracks can contain only a few samples of the entire duration of the video, or one sample per video frame, or even several samples per video frame.

In the present case, a timed metadata track carries the sequence of composite integer masks and the additional metadata needed to interpret the composite integer mask sample values. A video track carries the sequence of target depth images.

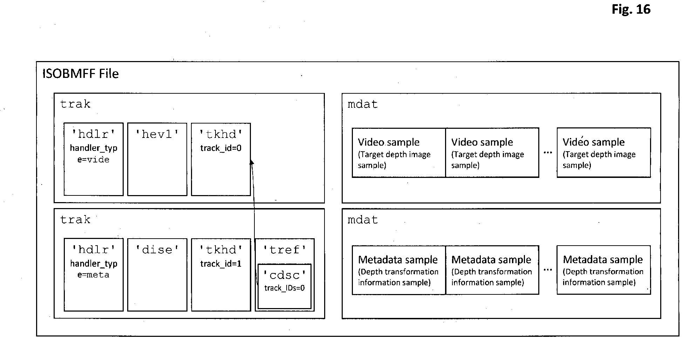

Fig. 16 shows an ISOBMFF file with a timed metadata track carrying the depth transformation information.

In the following example, we assume two tracks, namely, a video track with id = 0, and a timed metadata track with id = 1, as shown in Fig. 16. The former is identified by the 'vide' handler type, while the latter by the 'meta' handler type in the HandlerBox of the MediaBox. According to ISOBMFF [28] section 12.1.1 (Video media/Media handler):
- *Video media uses the 'vide' handler type in the HandlerBox of the MediaBox, as defined in 8.4.3.*

According to ISOBMFF [28] section 12.3.1 (Metadata media/Media handler):
- *Timed metadata media uses the 'meta' handler type in the HandlerBox of the MediaBox, as defined in 8.4.3.*

The timed metadata track (id = 1) contains a track reference box (with character code 'tref') including a reference of type 'cdsc' to the video track (id = 0), as specified in ISOBMFF [28] section 12.3.1 (Metadata media/Media handler):
- *Metadata tracks should be linked to the track they describe using a track-reference of type 'cdsc'.*

The meaning of this reference type is defined in ISOBMFF [28] section 8.3.3 (Track reference box), as follows:
- *'cdsc' links a descriptive or metadata track to the content which it describes.*

Sample entries can be defined in a trak box to specify how to parse track samples carried in the corresponding mdat box. In this example, the video track (id = 0) is encoded using the H.265/HEVC [30] codec, with the encoding and the track following the constraints defined by the 'hev1' sample entry, as specified in the ISO/IEC 14496-15 [38] standard. There is no sample entry to parse the depth transformation information samples contained in the timed metadata track (id = 1), thus, we define a new sample entry called 'dise' (stands for Depth transformation Information Sample Entry) and add it to the trak box of the timed metadata track (id = 1).

The following embodiment provides an example of using the timed metadata track. Other embodiments could be crafted following the same logic.

NOTE In the following embodiment, we consider that the video and timed metadata track samples are contained in two mdat boxes, as shown in Fig. 16. In other embodiments, the samples could be contained in one mdat box, and in that case, the samples would be interleaved.

NOTE In the following embodiment we consider that the video and timed metadata tracks are contained in the same file, as shown in Fig. 16. In other embodiments, the two tracks could be contained in two separate files.

NOTE In the following embodiment, the described signalling is following section "Embodiment 1" of carriage of composite integer mask using a SEI message. Analogously, the signalling could be modified accordingly to follow section "Embodiment 2" of carriage of composite integer mask using a SEI message or section "Embodiment 3" of carriage of composite integer mask using a SEI message. Other embodiments could also be crafted.

### Embodiment 1 of dynamic metadata using the timed metadata track

In this embodiment:
- The mdat box of the video track (id = 0) carries the sequence of target depth images;
- The 'dise' box in the trak box of the timed metadata track (id = 1) carries the number of spatial sub-regions and the number of source depth bands; and
- Each sample of the mdat box of the timed metadata track (id = 1) carries the source depth sub-range per spatial sub-region, the transformation per spatial sub-region, the representations of the combinations of a source depth band and a spatial sub-region, transformation-specific parameters per source depth band, and the composite integer mask.

The resolutions of the composite integer mask and the target depth image are the same; hence, the metadata in the trak box of the video track (id = 0) can be used to retrieve the width and height parameters (i.e., no need to specify them).

### Syntax

As defined by ISOBMFF 28, the metadata sample entry is:

```
 class MetaDataSampleEntry(codingname) extends SampleEntry
 (codingname) { }
 
```

For this method, we extend this generic type as follows:

```
class DepthTransformationInformationSampleEntry() extends
 MetaDataSampleEntry ('dise') {
 unsigned int(8) num_spatial_subregions;
 unsigned int(8) num_source_depth_bands;
 }
```

And the corresponding sample for such sample entry would be defined as follows:

```
 class DepthTransformationInformationSample () {
       for (k=0; k < num_spatial_subregions; k++) {
       unsigned int(16) source_depth_subrange_min[k] ;
       unsigned int(16) source_depth_subrange_max[k];
       unsigned int(4) transformation_type[k];
       for (m=0; m < num_source_depth_bands; m++) {
          unsigned int(8) combination_value [k] [m]
          if (transformation_type[k] == 0)
            unsigned int(16) offset[k] [m] ;
          if (transformation_type[k] == 1)
            unsigned int(16) bit_shift[k] [m] ;
          if (transformation_type[k] == 2) {
            unsigned int(16) target_depth_subrange_min [k] [m] ;
            unsigned int(16) target_depth_subrange_max [k] [m] ;
          }
          if (transformation_type[k] == 3) {
            unsigned int(14) quantization step value[k] [m] ;
            unsigned int(2) quantizer_type [k] [m] ;
          }
          if (transformation_type[k] == 4)
            unsigned int(16) constant_value [k] [m] ;
          unsigned int(4) reserved;
       }
      }
       for (i=0; i < pps_pic_height_in_luma_samples; i++) {
       for (j=0; j < pps_pic_width_in_luma_samples; j++) {
          unsigned int(16) mask_value[i] [j];
       }
     }
 }
```

### Semantics

**The semantics can be found in section "Semantics".**

### Dynamic metadata using the auxiliary video track

**Another method to carry depth transformation information is to use an auxiliary video track.**

**In this method, an auxiliary video track is added to the file and is associated to a primary video track that carries a sequence of primary pictures. The auxiliary video track contains a sequence of data that is encoded as a conventional video, which is not intended to be visually displayed.**

In the present case, an auxiliary video carries the sequence of composite integer masks. The additional metadata needed to interpret the composite integer mask sample values can be carried either as general untimed (i.e., static) metadata using the trak box structure, as presented in section "Embodiment 1" of dynamic metadata using the timed metadata track, or as timed (i.e., dynamic) metadata using a timed metadata track, as presented in section "Embodiment 2" of dynamic metadata using the timed metadata track, among other methods. A primary video track carries the sequence of target depth images.

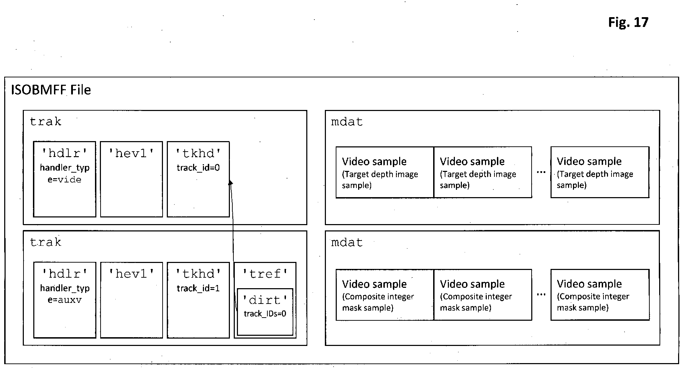

Fig. 17 shows an ISOBMFF file with an auxiliary video track associated to a primary video track.

In the following example, we assume two tracks, namely, a video track with id = 0, and an auxiliary video track with id = 1, as shown in Fig. 14. The former is identified by the 'vide' handler type, while the latter by the 'auxv' handler type in the HandlerBox of the MediaBox. According to ISOBMFF [28] section 12.1.1 (Video media/Media handler):
- *Video media uses the 'vide' handler type in the HandlerBox of the MediaBox, as defined in 8.4.3.*
- *Auxiliary video media uses the 'auxv' handler type in the HandlerBox of the MediaBox, as defined in 8.4.3.*

The auxiliary video track (id = 1) contains a track reference box (with character code 'tref') including a reference of a newly-defined type called 'dirt' (stands for Depth transformation Information Reference Type) to the video track (id = 0), as specified in ISOBMFF [28]28 section 12.1.1 (Video media/Media handler):
- *Auxiliary video tracks are usually linked to a video track by an appropriate track reference.*

The meaning of this new reference type is given as follows:
- 'dirt' *this track contains depth transformation information for the referenced video track.*

Sample entries can be defined in a trak box to specify how to parse track samples carried in the corresponding mdat box of a track. In this example, the video track (id = 0) and the auxiliary video track (id = 1) are encoded using the H.265/HEVC [30] codec, with the encoding and the tracks following the constraints defined by the 'hev1' sample entry, as specified in the ISO/IEC 14496-15 [30] standard. According to ISOBMFF [2] section 12.1.1 (Video media/Media handler):
- *An auxiliary video track is coded the same as a video track, but uses this different handler type, and is not intended to be visually displayed (e.g., it contains depth information, or other monochrome or colour two-dimensional information).*

The following embodiments provide examples of using the auxiliary video track. Other embodiments could be crafted following the same logic.

### Embodiment 1 of Dynamic metadata using the auxiliary video track

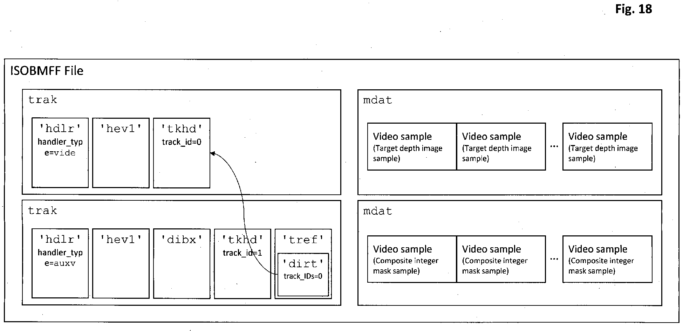

Fig. 18 shows an ISOBMFF file with an auxiliary video track carrying the depth transformation information.

In this embodiment, the additional metadata needed to interpret the composite integer mask sample values do not change for the duration of the track, and are carried as general untimed (i.e., static) metadata using the trak box structure. Thus, we define a new box called DepthTransformationInformationBox (with character code 'dibx') and add it to the trak box of the auxiliary video track (id = 1), as shown in Fig. 18.

In this embodiment:
- The mdat box of the video track (id = 0) carries the sequence of target depth images;
- The 'dibx' box in the trak box of the auxiliary video track (id = 1) carries the number of spatial sub-regions, the length of source depth bands per spatial sub-region, the number of source depth bands per spatial sub-region, the source depth sub-range per spatial sub-region, the transformation per spatial sub-region, the representations of the combinations of a source depth band and a spatial sub-region, and transformation-specific parameters per source depth band; and
- The mdat box of the auxiliary video track (id = 1) carries the sequence of composite integer masks.

The resolutions of the composite integer mask and the target depth image are the same; hence, the metadata in the trak box of the video track (id = 0) can be used to retrieve the width and height parameters (i.e., no need to specify them).

NOTE The same effect can be reached by placing the metadata in another auxiliary video track box (e.g., MetaBox) or by combining metadata using entity grouping, or associating the metadata with samples of the track using sample groups.

NOTE In the following embodiment, we consider that the video and auxiliary video tracks are contained in two mdat, as shown in Fig. 18. In other embodiments, the samples could be contained in one mdat, and in that case, the samples would be interleaved.

NOTE In the following embodiment we consider that the video and auxiliary video tracks are contained in the same file, as shown in Fig. 18. In other embodiments, the two tracks could be contained in two separate files.

NOTE In the following embodiment, the described signalling is following section "Embodiment 2" of carriage of composite integer mask using a SEI message. Analogously, the signalling could be modified accordingly to follow section "Embodiment 1" of carriage of composite integer mask using a SEI message or section "Embodiment 3" of carriage of composite integer mask using a SEI message. Other embodiments could also be crafted.

### Syntax

```
 aligned(8) class DepthTransformationInformationBox extends
 FullBox('dibx', 0, 0) {
    unsigned int(8) num_spatial_subregions;
    for (k=0; k < num_spatial_subregions; k++) {
       unsigned int(8) len_source_depth_bands[k];
       unsigned int(16) num_source_depth_bands[k];
       unsigned int(16) source_depth_subrange_min[k] ;
       unsigned int(16) source_depth_subrange_max[k];
       unsigned int(4) transformation_type[k];
       for (m=0; m < num_source_depth_bands[k]; m++) {
          unsigned int(8) combination_value[k] [m]
          if (transformation_type[k] == 0)
             unsigned int(16) offset [k] [m];
          if (transformation_type [k] == 1)
             unsigned int(16) bit_shift[k] [m] ;
          if (transformation_type[k] == 2) {
             unsigned int(16) target_depth_subrange_min[k][m];
             unsigned int(16) target_depth_subrange_max[k][m] ;
          }
          if (transformation_type[k] == 3) {
             unsigned int(14) quantization_step_value[k][m];
             unsigned int(2) quantizer_type[k][m];
          }
          if (transformation_type[k] == 4)
             unsigned int(16) constant_value[k][m];
             unsigned int(4) reserved;
       }
    }
 }
```

### Semantics

The semantics can be found in section "Semantics".

### Embodiment 2 of Dynamic metadata using the auxiliary video track

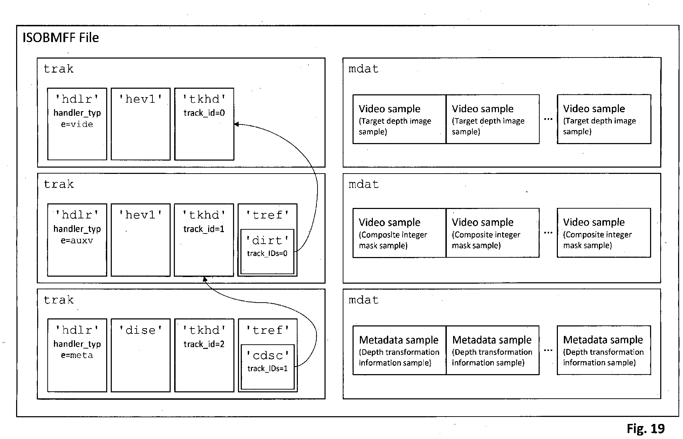

Fig. 19 shows an ISOBMFF file with an auxiliary video track and a timed metadata track carrying the depth transformation information.

In this embodiment, the additional metadata needed to interpret the composite integer mask sample values change per frame, and are carried as timed (i.e., dynamic) metadata using a timed metadata track. Thus, following the example presented in Fig. 17, we define a new timed metadata track with id = 2 and add it to the file, as shown in Fig. 16. Similarly to section " *Dynamic metadata using the timed metadata track",* this timed metadata track is identified by the 'meta' handler type in the HandlerBox of the MediaBox. The timed metadata track (id = 2) contains a track reference box (with character code 'tref') including a reference of type 'cdsc' to the auxiliary video track (id = 1). There is no sample entry to parse the depth transformation information samples contained in the timed metadata track (id = 2), thus, we define a new sample entry called 'dise' (stands for Depth transformation Information Sample Entry) and add it to the trak box of the timed metadata track (id = 2).

In this embodiment:
- The mdat box of the video track (id = 0) carries the sequence of target depth images;
- The mdat box of the auxiliary video track (id = 1) carries the sequence of composite integer masks;
- The 'dise' box in the trak box of the timed metadata track (id = 2) carries the number of spatial sub-regions and the length of source depth bands per spatial sub-region; and
- Each sample of the mdat box of the timed metadata track (id = 2) carries the number of source depth bands per spatial sub-region, the source depth sub-range per spatial sub-region, the transformation per spatial sub-region, the representations of the combinations of a source depth band and a spatial sub-region, and transformation-specific parameters per source depth band.

The resolutions of the composite integer mask and the target depth image are the same; hence, the metadata in the trak box of the video track (id = 0) can be used to retrieve the width and height parameters (i.e., no need to specify them).

NOTE In the following embodiment, we consider that the video, auxiliary video, and timed metadata tracks are contained in three mdat, as shown in Fig. 19. In other embodiments, the samples could be contained in one mdat, and in that case, the samples would be interleaved.

NOTE In the following embodiment we consider that the video, auxiliary video, and timed metadata tracks are contained in the same file, as shown in Fig. 19. In other embodiments, the three tracks could be contained in three separate files, or in two separate files containing one and two tracks.

NOTE In the following embodiment, the described signalling is following section "Embodiment 2" of carriage of composite integer mask using a SEI message. Analogously, the signalling could be modified accordingly to follow section "Embodiment 1" of carriage of composite integer mask using a SEI message or section "Embodiment 3" of carriage of composite integer mask using a SEI message. Other embodiments could also be crafted.

### Syntax

As defined by ISOBMFF[28], the metadata sample entry is:

```
 class MetaDataSampleEntry(codingname) extends SampleEntry
 (codingname) { }
```

For this method, we extend this generic type as follows:

```
 class DepthTransformationSampleEntry() extends MetaDataSampleEntry
 ( 'dise' ) {
 unsigned int(8) num_spatial_subregions;
 for (k=0; k < num_spatial_subregions; k++)
 unsigned int(8) len_source_depth_bands[k];
 }
```

And the corresponding sample for such sample entry would be defined as follows:

```
 class DepthTransformationInformationSample() {
    for (k=0; k < num_spatial_subregions; k++) {
       unsigned int(16) num_source_depth_bands[k];
       unsigned int(16) source_depth_subrange_min[k];
       unsigned int(16) source_depth_subrange_max[k];
       unsigned int(4) transformation_type[k];
       for (m=0; m < num_source_depth_bands[k]; m++) {
          unsigned int(8) combination_value[k][m]
          if (transformation_type[k] == 0)
            unsigned int(16) offset[k][m];
          if (transformation_type[k] == 1)
            unsigned int(16) bit_shift[k] [m] ;
          if (transformation_type[k] == 2) {
            unsigned int(16) target_depth_subrange_min[k][m] ;
            unsigned int(16) target _depth_subrange_max[k][m];
          }
          if (transformation_type[k] == 3) {
            unsigned int(14) quantization_step_value[k][m];
            unsigned int(2) quantizer_type[k][m] ;
          }
          if (transformation_type[k] == 4)
            unsigned int(16) constant_value[k][m];
          unsigned int(4) reserved;
      }
    }
 }
```

### Semantics

The semantics can be found in section "Semantics".

### Beneficial effects of the solution

1. Embodiments enable the usage of lower bit-depth codecs to encode higher bit-depth source depth images.
1. Embodiments enable a codec-agnostic depth coding solution.
2. Embodiments enable lossless bit-depth reduction at any bit depth in determined spatial sub-regions (e.g., important regions can be represented losslessly at any bit depth), and/or lossy bit-depth reduction at any bit depth with adjustable quality and bitrate savings in other determined spatial sub-regions (e.g., unimportant regions can be represented with low quality leading to bitrate savings).
3. Embodiments enable reduction of the number of bits used for representation, encoding and storing of metadata for association information and interpretation of target depth image sample values.

### Possible extensions of the solution

1. The same steps could be followed for different types of imaging (e.g., colour, texture, etc.), with appropriate adjustments.
   a. For RGB images, for instance, we would need an integer mask with 3 components.
2. The proposed solution could work without encoding/decoding the target depth image. Specifically, by excluding the encoding process of step 6 and the decoding process of step 2 in the technical steps of the capturing and receiving device, respectively, provided in section "Steps". In this case, the solution would act as a type of depth image representation, where instead of using higher bit-depth for the binary representation of a source depth image, a lower bit-depth binary representation for the target depth image could be used in combination with the generated metadata.

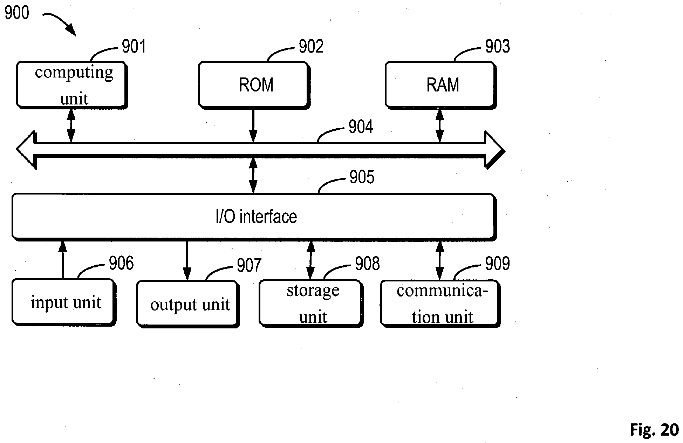

Fig. 20 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method for transforming a source depth image into a target depth image, the method comprising:
   obtaining the source depth image comprising a multitude of source depth image samples each comprising a source depth image sample value being within a source depth image sample bit depth;
   determining a plurality of spatial sub-regions of the source depth image such that each of the spatial sub-regions comprises a subset of the source depth image samples, e.g., at least a first spatial sub-region and a second spatial sub-region of the source depth image;
   for each spatial sub-region:
      determining a corresponding [1^{st}/2^{nd}/...] source depth sub-range from corresponding source depth image sample values of the corresponding spatial sub-region;
      determining an associated set of source depth bands from the source depth sub-range; and
      applying an associated transformation to each source depth image sample value based on the source depth band it belongs to from the associated set of source depth bands, to transform it into a target depth image sample value of the target depth image that falls within a target depth range; and
   wherein each source depth image sample is associated with a source depth band;
   wherein, optionally, each source depth image sample is associated with the source depth band and a corresponding spatial sub-region.
A 2^{nd} embodiment provides the method according to the 1^{st} embodiment, wherein a depth band comprises a band of source depth image sample values.
A 3^{rd} embodiment provides the method according to one of the 1^{st} or 2^{nd} embodiments, further comprising generating metadata, e.g., depth transformation information, indicating at least one of:
   (a) the first and/or the second source depth sub-ranges associated with the respective spatial sub-region,
   (b) the first and/or the second sets of source depth bands associated with the respective spatial sub-region,
   (c) the first and/or the second applied transformation used for the respective sets of source depth bands,
   (d) association information indicating the association between source depth image samples, source depth bands and spatial sub-regions, and
   (e) association information indicating a transformer used, e.g., in a decoder.
A 4^{th} embodiment provides the method according to the 3^{rd} embodiment, wherein none, one of or both of a number of spatial sub-regions and a number of source depth bands in the first and second sets, determined in the first and second spatial sub-regions, respectively, are signalled in the depth transformation information.
A 5^{th} embodiment provides the method according to the 3^{rd} or 4^{th} embodiment, wherein the target depth range is obtained from signalling such as Sequence Parameter Sets, or wherein the target depth range is signalled in the depth transformation information.
A 6^{th} embodiment provides the method according to one of the 3^{rd} to 5^{th} embodiments, wherein the associated transformations are determined for the first and second sets of source depth bands in the first and second spatial sub-regions, respectively, and are signalled using pre-defined tables.
A 7^{th} embodiment provides the method according to one of the 3^{rd} to 6^{th} embodiments, wherein a first set of source depth bands and a second set of source depth bands are determined in the first and second spatial sub-region and are signalled in the depth transformation information using a length of the source depth bands for the first and second sets, wherein the length, combined with first and/or second source depth sub-ranges, indicate non-overlapping, contiguous, equal-length source depth bands for at least one of first set of source depth bands and a second set of source depth bands
An 8^{th} embodiment provides the method according to one of the 3^{rd} to 7^{th} embodiments, comprising: indicating a number of source depth bands for at least one set of source depth band; and/or
   indicating overlapping or non-overlapping, contiguous or non-contiguous, equal- or varying-length source depth bands for the first and/or second sets using a data structure storing start and end boundaries of the source depth bands.
A 9^{th} embodiment provides the method according to one of the 3rd to 8th embodiments, wherein the association information between source depth image samples and combinations of a source depth band and a spatial sub-region includes representation information for the combinations; wherein the method comprises signalling the association information.
A 10th embodiment provides the method according to one of the 1st to 9th embodiments, further comprising: determining, from a plurality of available transformations, a first transformation for a first set of source depth bands and for the transformation of associated source depth image sample values, wherein, optionally the first transformation is determined based on the bands or the sub-region; and/or
   determining, from a plurality of available transformations, a second transformation for a second set of source depth bands and for the transformation of associated source depth image sample values, wherein, optionally the second transformation is determined based on the bands or the sub-region.
An 11^{th} embodiment provides the method according to one of the 1^{st} to 10^{th} embodiments, further comprising: encoding the target depth image with the target depth image sample bit depth to obtain an encoded target depth image; and/or
   encapsulating an encoded target depth image and depth transformation information related to the applied transformation.
A 12^{th} embodiment provides the method according to the 13^{th} embodiment, wherein the entire target depth image is encoded with same encoding configurations; or wherein different encoding configurations are used for different spatial sub-regions.
A 13^{th} embodiment provides the method according to the 12^{th} embodiment, wherein a composite integer mask, where a composite integer mask sample value indicates the source depth band and the spatial sub-region of the co-located source depth image sample, and the target depth image are encapsulated together with the depth transformation information.
A 14^{th} embodiment provides the method according to one of the 12^{th} to 13^{th} embodiments, wherein encapsulated data comprising the depth transformation information is signalled either at a bitstream level or at a file format level;
   wherein for the bitstream level, the encapsulated data comprising the depth transformation information is signalled using a Supplemental Enhancement Information (SEI) message, an auxiliary picture and/or unused chromatic components of an image plane or
   wherein for a file format level, the depth transformation information is signalled in a ISO Base Media File Format (ISOBMFF).
A 15^{th} embodiment provides the method according to the 14^{th} embodiment, wherein for a file format level signalling the depth transformation information is carried using a timed metadata track that is added to the file and is associated to a video track that carries the sequence of target depth images; or
   wherein the depth transformation information is partly caried using a box in the trak box structure or sample grouping or entity grouping and partly carried using an auxiliary video track, wherein the method comprises: adding an auxiliary video track to the file and associating the auxiliary video track to a primary video track that carries a sequence of primary pictures such as target depth images.
A 16^{th} embodiment provides the method according to the 15^{th} embodiment, executed such that the timed metadata track carries the sequence of composite integer masks and the additional metadata to interpret the composite integer mask sample values and such that a video track carries the sequence of target depth images.
A 17^{th} embodiment provides the method according to the 16^{th} embodiment, wherein the target depth image is provided as one of a plurality target depth images of a video sequence; and SEI messages is are generated to carry the composite integer mask and related metadata adapted to interpret the composite integer mask sample values.
An 18^{th} embodiment provides the method according to one of the 1^{st} to 17^{th} embodiments, wherein obtaining the source depth image comprises obtaining the source depth image is obtained from
   - at least one physical sensor,
   - a virtual depth camera,
   - an Al model, in real or simulated environments, and/or
   - different depth representations.
A 19^{th} embodiment provides the method according to one of the 1^{st} to 18^{th} embodiments, wherein the obtained source depth image comprise raw depth data at an original precision, as captured or estimated by a source of the depth image; or
   wherein the source depth image is obtained after one or more of uniform or non-uniform quantization of raw depth data; after applying a reciprocal function to the raw depth data; after applying a processing or function.
A 20^{th} embodiment provides the method according to one of the 1^{st} to 19^{th} embodiments, wherein the first and second spatial sub-region are determined by using pre-determined spatial sub-regions; and/or by applying a processing to the source depth image.
A 21^{st} embodiment provides the method according to one of the 1^{st} to 20^{th} embodiments, wherein at least a third spatial sub-region region of the source depth image is a third source depth sub-range from corresponding source depth image sample values of the third spatial sub-region is determined, wherein the method comprises;
   determining an associated third set of source depth bands from the source depth sub-range; and
   applying a third transformation to each source depth image sample value based on the source depth band it belongs to from the third set of source depth bands, to transform it into a target depth image sample value of the target depth image that falls within a target depth range.
A 22^{nd} embodiment provides the method according to one of the 1^{st} to 21^{st} embodiments, wherein a concatenation of spatial sub-regions is equal to the entire source depth image.
A 23^{rd} embodiment provides the method according to one of the 1^{st} to 22^{nd} embodiments, wherein a concatenation of spatial sub-regions is a subset of the entire source depth image.
A 24^{th} embodiment provides the method according to the 23^{rd} embodiment, further comprising: implying an extra spatial sub-region as a remaining portion of the source depth image, excluding the concatenation of the determined spatial sub-regions, wherein a default or pre-determined transformation is applied to every source depth image sample value that falls within this extra spatial sub-region based on the corresponding source depth band it belongs to, or wherein the remaining portion of the source depth image, excluding the concatenation of the determined spatial sub-regions, is cropped.
A 25^{th} embodiment provides the method according to one of the 1^{st} to 24^{th} embodiments, wherein the determined spatial sub-regions are non-overlapping.
A 26^{th} embodiment provides the method according to one of the 1^{st} to 25^{th} embodiments, wherein the determined spatial sub-regions are determined as overlapping spatial sub-regions, wherein the method comprises deciding in which spatial sub-region a source depth image sample of an overlap region of overlapping spatial sub-regions is assigned.
A 27^{th} embodiment provides the method according to one of the 1^{st} to 26^{th} embodiments, wherein a first set of source depth bands from the first source depth sub-range is determined as contiguous depth band; and/or
   wherein a second set of source depth bands from the second source depth sub-range is determined as contiguous depth band.
A 28^{th} embodiment provides the method according to one of the 1^{st} to 26^{th} embodiments, wherein one of a first set of source depth bands and a second set of source depth bands from the second source depth sub-range is determined as non-contiguous depth band; and boundaries thereof are adjusted based on source depth image sample values contained in the non-contiguous bands.
A 29^{th} embodiment provides the method according to one of the 1^{st} to 28^{th} embodiments, wherein at least one set of source depth bands comprises a number of bands being greater than 1.
A 30^{th} embodiment provides the method according to one of the 1^{st} to 29^{th} embodiments, wherein first source depth bands in a first set of source depth bands associated with the first spatial sub-region and second source depth bands in a second set of source depth bands associated with the second spatial sub-region have a same length; or wherein at least one of the first set and the second set comprises bands of different lengths.
A 31^{st} embodiment provides the method according to one of the 1^{st} to 30^{th} embodiments, wherein the sets of source depth bands are determined in the first and second spatial sub-region as equal to first and second source depth sub-ranges associated with the first and second spatial sub-regions; or
   wherein at least one sets of source depth bands is determined in the first and second spatial sub-region as being larger than or a superset of the first and second source depth sub-ranges.
A 32^{nd} embodiment provides the method according to one of the 1^{st} to 31^{st} embodiments, wherein the source depth bands of the sets are determined by using one or more of:
   - pre-defined source depth bands,
   - only the minimum and maximum values of the source depth sub-range of the spatial sub-region,
   - a distribution of source depth image sample values within the spatial sub-region,
A 33^{rd} embodiment provides the method according to one of the 1^{st} to 32^{nd} embodiments, wherein a first set of source depth bands associated with the first spatial sub-regions and a second set of source depth bands associated with the second spatial sub-regions are determined such that a concatenation of the first set of source depth bands is equal to a source depth range of the entire source depth image and such that a concatenation of the second set of source depth bands is equal to a source depth range of the entire source depth image.
A 34^{th} embodiment provides the method according to one of the 1^{st} to 33^{rd} embodiments, wherein one of a first set of source depth bands associated with the first spatial sub-regions and a second set of source depth bands associated with the second spatial sub-regions is determined across the entire source depth image, such that a concatenation of these source depth bands is equal to the source depth range of the entire source depth image.
A 35^{th} embodiment provides the method according the 34^{th} embodiment, wherein the first and second source depth sub-ranges and a first and a second set of source depth bands is excluded from a depth transformation information provided.
A 36^{th} embodiment provides the method according the 35^{th} embodiment, comprising generating metadata to signal remaining sets of source depth bands resulting from excluding sets from the depth transformation.
A 37^{th} embodiment provides the method according to one of the 1^{st} to 36^{th} embodiments, wherein a first transformation determined for a first set of source depth bands associated with the first spatial sub-region is lossless, and a second transformation determined for the second set of source depth bands associated with the second spatial sub-region is lossy.
A 38^{th} embodiment provides the method according to one of the 1^{st} to 37^{th} embodiments, wherein a first transformation determined for a first band of one of a first set and a second set of source depth bands is lossless, and a second transformation determined for a second band of one of the first set and the second set of source depth bands is lossy.
A 39^{th} embodiment provides the method according to one of the 1^{st} to 38^{th} embodiments, wherein different transformations are used for the first set of source depth bands of the first spatial sub-region and for the second set of source depth bands of the second spatial sub-region; or wherein a different transformations are used per combination of source depth band and spatial sub-region.
A 40^{th} embodiment provides the method according to one of the 1^{st} to 39^{th} embodiments, wherein a source depth image sample bit depth is one of larger than, same as or lower than a target depth image sample bit depth of the target depth image.
A 41^{st} embodiment provides the method according to one of the 1^{st} to 40^{th} embodiments, wherein applying the associated transformation to each source depth image sample value in the first or second spatial sub-region, respectively, the corresponding target depth image sample values falls within the target depth range; or falls within a specific target depth sub-range determined for the target depth image sample values obtained after applying a transformation per spatial sub-region, or determined per combination of source depth band and spatial sub-region.
A 42^{nd} embodiment provides the method according to one of the 1^{st} to 41^{st} embodiments, wherein association information indicates the association between source depth image samples and the source depth band and the spatial sub-region; wherein the method comprises representing the association information using a composite integer mask, wherein a composite integer mask sample value indicates the source depth band and the spatial sub-region of the co-located source depth image sample; or
   wherein association information indicates the association between source depth image samples and the source depth band and the spatial sub-region; wherein the method comprises representing the association information by using bounding boxes or coordinates in combination with a source depth band integer mask, wherein the bounding boxes or coordinates indicate boundaries of a spatial sub-region, such that the source depth band integer mask sample value indicates the source depth band of the co-located source depth image sample.
A 43^{rd} embodiment provides the method according to one of the 1^{st} to 42^{nd} embodiments, wherein at least one of the first spatial sub-region, the second spatial sub-region, source depth bands associated with the first and/or second spatial sub-regions and a composite integer mask related to the source depth band and the spatial sub-region of the co-located source depth image sample, is determined per source depth image; or wherein at least one of the first spatial sub-region, the second spatial sub-region, source depth bands associated with the first and/or second spatial sub-regions and a composite integer mask related to the source depth band and the spatial sub-region of the co-located source depth image sample, are determined for more than one source depth image.
A 44^{th} embodiment provides the method according to one of the 1^{st} to 43^{rd} embodiments, wherein at least one of the source depth image, a composite integer mask, related to the source depth band and the spatial sub-region of the co-located source depth image sample and the target depth image are handled as unprocessed information; or
   wherein the method comprises applying further processing to at least one of the source depth image, a composite integer mask related to the source depth band and the spatial sub-region of the co-located source depth image sample and the target depth image, e.g., to reduce bitrate.
A 45^{th} embodiment provides the method according to the 44^{th} embodiment, comprising: including additional metadata into depth transformation information to signal one or more of: how the downscaling is conducted, which rows/columns are cropped from the source depth image, the target depth image, the composite integer mask, a spatial association between a processed source depth image, a processed composite integer mask, and/or a processed target depth image.
A 46^{th} embodiment provides the method according to one of the 1^{st} to 45^{th} embodiments, executed so that a composite integer mask related to the source depth band and the spatial sub-region of the co-located source depth image sample on the one hand and the target depth image on the other hand have a same resolution and a 1-1 spatial association with the source depth image, respectively.
A 47^{th} embodiment provides the method according to one of the 1^{st} to 46^{th} embodiments, executed so that a composite integer mask related to the source depth band and the spatial sub-region of the co-located source depth image sample on the one hand and the target depth image on the other hand have a different spatial association.
A 48^{th} embodiment provides the method according to the 47^{th} embodiment, comprising: including additional metadata into depth transformation information to signal the spatial association of the composite integer mask and/or the target depth image with the source depth image, respectively.
A 49^{th} embodiment provides the method according to one of the 1^{st} to 48^{th} embodiments, executed with a spatial alignment between the source depth image, a composite integer mask related to the source depth band and the spatial sub-region of the co-located source depth image sample, and the target depth image; the method executed to avoid an explicit description of the spatial association between them in the depth transformation information.
A 50^{th} embodiment provides the method according to one of the 1^{st} to 49^{th} embodiments, executed with a spatial misalignment between the source depth image, a composite integer mask related to the source depth band and the spatial sub-region of the co-located source depth image sample, and the target depth image; the method comprising spatially aligning the target depth image and the composite integer mask.
A 51^{st} embodiment provides the method according to one of the 1^{st} to 50^{th} embodiments, wherein the source depth image is a single depth image or a frame of a depth videos.
A 52^{nd} embodiment provides the method according to one of the 1^{st} to 51^{st} embodiments, comprising: providing an SEI message providing information describing a number of spatial sub-regions, a number of source depth bands, a source depth sub-range per spatial sub-region, a transformation per spatial sub-region, a representation of combinations of a source depth band and a spatial sub-region, a transformation-specific parameter per source depth band, and a the composite integer mask in a video, e.g., as depth_transformation_info SEI message being defined up to a frame.
A 53^{rd} embodiment provides the method according to one of the 1^{st} to 52^{nd} embodiments, wherein a video sequence carries a sequence of target depth images; and a first SEI message carries metadata providing information to interpret the association information sample values (e.g., a composite integer mask sample values); and the same or a second SEI message carries the association information.
A 54^{th} embodiment provides the method according to the 53^{rd} embodiment, wherein resolutions of the composite integer mask and the target depth image are the same so that a Sequence Parameter Set (SPS) signalling is used to retrieve width and height parameters of the integer mask.
A 55^{th} embodiment provides the method according to the 53^{rd} or 54^{th} embodiment, wherein resolutions of the composite integer mask and the target depth image are different and width and height parameters of the integer mask are specified, e.g., in the second SEI message.
A 56^{th} embodiment provides the method according to the 55^{th} embodiment, further comprising: performing a rescaling operation for the integer mask such that the rescaled combined integer mask resolution matches the resolution of the source depth images.
A 57^{th} embodiment provides the method according to one of the 1^{st} to 56^{th} embodiments, wherein the association information such as a composite integer mask related to the source depth band and the spatial sub-region of the co-located source depth image sample is carried by use of at least one auxiliary picture.
A 58^{th} embodiment provides the method according to the 57^{th} embodiment, further comprising: encoding a sequence of data as a sequence of auxiliary pictures, forming an auxiliary layer that is associated to a primary layer.
A 59^{th} embodiment provides the method according to the 57^{th} or 59^{th} embodiment, wherein a sequence of auxiliary pictures carries a sequence of composite integer masks, forming the composite integer mask auxiliary layer; wherein a sequence of primary pictures carries the sequence of target depth images, forming the primary layer that is associated to the auxiliary layer; and an SEI message is used to carry additional metadata to interpret the composite integer mask auxiliary picture sample values.
A 60^{th} embodiment provides the method according to one of the 1^{st} to 59^{th} embodiments, wherein a sequence of auxiliary pictures of a type AUX_COMPOSITE_INTEGER_MASK carries a sequence of composite integer masks; wherein a sequence of primary pictures carries a sequence of target depth images; and an SEI message us used to carry metadata to interpret the composite integer mask sample values.
A 61^{st} embodiment provides the method according to the 60^{th} embodiment, wherein a resolutions of the composite integer mask and of the source depth image are the same; wherein a Sequence Parameter Set (SPS) signalling is used to retrieve width and height parameters of the integer mask.
A 62^{nd} embodiment provides the method according to one of the 1^{st} to 61^{st} embodiments, wherein the source image is an image comprising at least one component.
A 63^{rd} embodiment provides a method for decoding a depth image, the method comprising:
   obtaining encapsulated depth image and depth transformation information;
   parsing the depth transformation information comprising at least one of:
      (a) the first and/or the second source depth sub-ranges associated with the respective spatial sub-region,
      (b) the first and/or the second sets of source depth bands associated with the respective spatial sub-region,
      (c) the first and/or the second applied transformation used for the respective sets of source depth bands,
      (d) association information indicating the association between source depth image samples, source depth bands and spatial sub-regions, and
      (e) association information indicating a transformer used, e.g., in a decoder,
   reconstructing the source depth image from the decoded depth image and the parsed depth transformation information, with the reconstructed source depth image samples taking values from the source depth range.
A 64^{th} embodiment provides the method according to the 63^{rd} embodiment, wherein the encapsulated depth image is an encoded depth image, the method comprising:
   decoding the encoded depth image.
A 65^{th} embodiment provides a non-transitory computer-readable storage medium comprising instructions which, when executed by a computer, cause the computer to carry out the method of any one of the preceding claims.
A 66^{th} embodiment provides a device comprising a processing unit, wherein the device is configured for executing the method of one the 1^{st} to 62^{nd} embodiments.
A 67^{th} embodiment provides a data container encapsulating depth data of a scene, the data container comprising metadata for signalling depth transformation information about an association of a source depth image sample with a source depth band and a corresponding spatial sub-region of a depth image.
A 68^{th} embodiment provides a data stream having encoded thereinto depth data of a scene, the data stream comprising:
   metadata for signalling depth transformation information about an association of a source depth image sample with a source depth band and a corresponding spatial sub-region of a depth image.
A 69^{th} embodiment provides a device comprising a processing unit, wherein the device is configured for executing the method of one of the 63^{rd} or 64^{th} embodiments.

### List of abbreviations

- AI: Artificial Intelligence
- AV1: AOMedia Video 1
- AV2: AOMedia Video 2
- AVC: ISO/IEC 14496-10 Advanced Video Coding (AVC) / ITU-T Rec. H.264
- AU: Access Unit
- CLVS: Coded Layered Video Sequence
- CVS: Coded Video Sequence
- EVC: ISO/IEC 23094-1 Essential video coding (EVC)
- HEVC: ISO/IEC 23008-2 High Efficiency Video Coding (HEVC) / ITU-T Rec. H.265
- HMD: Head-Mounted Display
- ISOBMFF: ISO/IEC 14496-12 ISO Base Media File Format
- LiDAR: Light Detection And Ranging
- NAL: Network Abstraction Layer
- MPEG: Moving Picture Experts Group
- MVC: Multiview Video Coding [refers to ISO/IEC 14496-10 when the techniques in Annex H (Multiview Video Coding) are in use]
- MVC+D: Multiview Video Coding Plus Depth [refers to ISO/IEC 14496-10 when the techniques in Annex I (Multiview and Depth Video Coding) are in use]
- MV-HEVC: Multiview High Efficiency Video Coding [refers to ISO/IEC 23008-2 when the techniques in Annex G (Multiview High Efficiency Video Coding) are in use]
- RGB: Red Green Blue (colour space)
- RGBD: Red Green Blue (RGB) plus depth
- RGB+D: see RGBD
- RTP: Real-time Transport Protocol
- SDI: Scalability Dimension Information
- SEI: Supplemental Enhancement Information
- SPS: Sequence Parameter Set
- VVC: ISO/IEC 23090-3 Versatile Video Coding (VVC) / ITU-T Rec. H.266
- VSEI: Versatile Supplemental Enhancement Information messages for coded video bitstreams / ITU-T Rec H.274
- XR: eXtended Reality

### List of definitions

**image representation**
a 2D array of samples, with each sample corresponding to a discrete point in the 3D space, and the sample value representing an intensity value
**depth value**
distance of a given point in 3D space relative to an origin, as measured along a certain direction
**depth data**
a collection of depth values
**depth image**
an image representation of depth data; each sample is associated with a depth value with each sample corresponding to a discrete point in the 3D space, and the sample value representing the depth value of that point.
**RGB image**
an image representation of RGB colour data; each sample is associated with a colour (RGB) value
**RGBD image**
an image representation of spatio-temporally aligned RGBD data; each sample is associated with a colour (RGB) and a depth (D) value

### REFERENCES

1. Wikipedia, Perpendicular distance, https://en.wikipedia.org/wiki/Perpendicular_distance (accessed 13/10/2024).
2. ARCore, https://developers.google.com/ar/develop/java/depth/developer-guide (accessed 13/10/2024).
3. ARCore, ArFrame_acquireDepthlmage16Bits, https://developers.google.com/ar/reference/c/group/ar-frame#arframe_acquiredepthimage16bits, (accessed 13/10/2024).
4. Intel RealSense D400 Series Product Family Datasheet, https://dev.intelrealsense.com/docs/intel-realsense-d400-series-product-family-datasheet (accessed 13/10/2024).
5. Use Azure Kinect Sensor SDK to record file format, https://learn.microsoft.com/en-us/azure/kinect-dk/record-file-format (accessed 13/10/2024).
6. Azure Kinect DK coordinate systems, https://learn.microsoft.com/en-us/azure/kinect-dk/coordinate-systems (accessed 13/10/2024).
7. Azure Kinect DK·hardware specifications, https://learn.microsoft.com/en-us/azure/kinect-dk/hardware-specification (accessed 13/10/2024).
8. Use Azure Kinect Sensor SDK image transformations, https://learn.microsoft.com/en-us/azure/kinect-dk/use-image-transformation (accessed 13/10/2024).
9. C. Fehn, "A 3D-TV approach using depth-image-based rendering (DIBR)", In Proc. of VIIP, vol. 3, no. 3, 2003.
10. Y. Chen and A. Vetro, "Next-Generation 3D Formats with Depth Map Support," in IEEE MultiMedia, vol. 21, no. 2, pp. 90-94, Apr.-June 2014.
11. Depth image compression by colourization for Intel RealSense Depth Cameras, https://dev.intelrealsense.com/docs/depth-image-compression-by-colorization-for-intel-realsense-depth-cameras (accessed 13/10/2024).
12. Pece, F., Kautz, J., Weyrich, T.: Adapting standard video codecs for depth streaming. In: Proceedings of EGVE-JVRC 2011, pp. 59-66, Aire-la-Ville, Switzerland. Eurographics Association (2011).
13. Encoding depth and confidence, https://developers.google.com/depthmap-metadata/encoding (accessed 28/02/2025).
14. E. Alexiou, E. Thomas, E. Potetsianakis, METHOD AND APPARATUS FOR PROCESSING AN IMAGE
15. E. Alexiou, E. Thomas, E. Potetsianakis, DEPTH CODING USING SPATIAL DECOMPOSITION
16. J. Fu, D. Miao, W. Yu, S. Wang, Y. Lu and S. Li, "Kinect-Like Depth Data Compression," in IEEE Transactions on Multimedia, vol. 15, no. 6, pp. 1340-1352, Oct. 2013.
17. Oh, K.J., Yea, S., Vetro, A. and Ho, Y.S., 2009. Depth reconstruction filter for depth coding. Electronics letters, 45(6), pp.305-306.
18. R. Krishnamurthy, Bing-Bing Chai, Hai Tao and S. Sethuraman, "Compression and transmission of depth maps for image-based rendering," Proceedings 2001 International Conference on Image Processing (Cat. No.01CH37205), Thessaloniki, Greece, 2001, pp. 828-831 vol.3.
19. Zanuttigh P, Cortelazzo GM. Compression of depth information for 3D rendering. In2009 3DTV Conference: The True Vision-Capture, Transmission and Display of 3D Video 2009 May 4 (pp. 1-4). IEEE.
20. Morvan, Y. and Farin, D., 2005, June. Novel coding technique for depth images using quadtree decomposition and plane approximation. In Visual Communications and Image Processing 2005 (Vol. 5960, pp. 1187-1194). SPIE.
21. Wilson, A.D., 2017, October. Fast lossless depth image compression. In Proceedings of the 2017 ACM International Conference on Interactive Surfaces and Spaces (pp. 100-105).
22. Jun, H. and Bailenson, J., 2020, March. Temporal rvl: a depth stream compression method. In 2020 IEEE conference on virtual reality and 3D user interfaces abstracts and workshops (VRW) (pp. 664-665). IEEE.
23. Belyaev, E., Mantel, C. and Forchhammer, S., 2017, August. High bit depth infrared image compression via low bit depth codecs. In Infrared Remote Sensing and Instrumentation XXV (Vol. 10403, pp. 61-68). SPIE.
24. R. Du, E. Turner, M. Dzitsiuk, L. Prasso, I. Duarte, J. Dourgarian, J. Afonso, J. Pascoal, J. Gladstone, N. Cruces, S. Izadi, A. Kowdle, K. Tsotsos, and D. Kim. 2020. DepthLab: Real-Time 3D Interaction With Depth Maps for Mobile Augmented Reality. Proceedings of the 33rd Annual ACM Symposium on User Interface Software and Technology, pp. 15.
25. Looking Glass Portrait - Looking Glass Factory, https://lookingglassfactory.com/portrait#usecases (accessed 13/10/2024).
26. Hologram 101 - Looking Glass Documentation, https://docs.lookingglassfactory.com/keyconcepts/key-concepts (accessed 13/10/2024).
27. W. Sun, L. Xu, O. C. Au, S. H. Chui, and C. W. Kwok. "An overview of free view-point depth-image-based rendering (DIBR)." In APSIPA Annual Summit and Conference, pp. 1023-1030, 2010.
28. ISO/IEC 14496-12 "Information technology - Coding of audio-visual objects - Part 12: ISO base media file format", https://www.iso.org/standard/83102.html
29. ISO/IEC 14496-10 "Information technology - Coding of audio-visual objects - Part 10: Advanced Video Coding (AVC)", https://www.iso.org/standard/83529.htmi
30. ISO/IEC 23008-2:2023 "Information technology - High efficiency coding and media delivery in heterogeneous environments - Part 2: High efficiency video coding (HEVC)", https://www.iso.org/standard/85457.html
31. ISO/IEC 23094-1:2020, "Information technology - General video coding - Part 1: Essential video coding (EVC)", https:/lwww.iso.org/standard/57797.html
32. ISO/IEC 23090-3:2022 "Information technology - Coded representation of immersive media - Part 3: Versatile video coding (VVC)", https://www.iso.org/standard/83531.html
33. AV1 Bitstream & Decoding Process Specification, http://aomedia.org/av1/specification/
34. Wikipedia, Quantization (signal processing), https://en.wikipedia.org/wiki/Quantization_(signal_processing) (accessed 16/10/2024).
35. ISO/IEC 23002-7:2022 "Information technology - MPEG video technologies - Part 7: Versatile supplemental enhancement information messages for coded video bitstreams", https://www.iso.org/standard/83530.html
36. ISO/IEC 23091-2 "Information technology - Coding-independent code points - Part 2: Video" https://www.iso.org/standard/81546.html
37. Wikipedia, Chroma subsampling, https://en.wikipedia.org/wiki/Chroma_subsampling (accessed 13/10/2024)
38. ISO/IEC 14496-15 "Information technology - Coding of audio-visual objects - Part 15: Carriage of network abstraction layer (NAL) unit structured video in the ISO base media file format" https://www.iso.org/standard/83336.html

## Claims

1. A method for transforming a source depth image into a target depth image, the method comprising:
obtaining the source depth image comprising a multitude of source depth image samples each comprising a source depth image sample value being within a source depth image sample bit depth;
determining a plurality of spatial sub-regions of the source depth image such that each of the spatial sub-regions comprises a subset of the source depth image samples, e.g., at least a first spatial sub-region and a second spatial sub-region of the source depth image;
for each of the spatial sub-regions:
determining a corresponding source depth sub-range from corresponding source depth image sample values of the corresponding spatial sub-region;
determining an associated set of source depth bands from the source depth sub-range; and
applying an associated transformation to each source depth image sample value based on the source depth band it belongs to from the associated set of source depth bands, to transform it into a target depth image sample value of the target depth image that falls within a target depth range; and
wherein each source depth image sample is associated with a source depth band;
wherein, optionally, each source depth image sample is associated with the source depth band and a corresponding spatial sub-region.

2. The method of claim 1, further comprising generating metadata, e.g., depth transformation information, indicating at least one of:
(a) the first and/or the second source depth sub-ranges associated with the respective spatial sub-region,
(b) the first and/or the second sets of source depth bands associated with the respective spatial sub-region,
(c) the first and/or the second applied transformation used for the respective sets of source depth bands,
(d) association information indicating the association between source depth image samples, source depth bands and spatial sub-regions, and
(e) association information indicating a transformer used, e.g., in a decoder.

3. The method of claim 1 or 2, further comprising: determining, from a plurality of available transformations, a first transformation for a first set of source depth bands and for the transformation of associated source depth image sample values, wherein, optionally the first transformation is determined based on the bands or the sub-region; and/or
determining, from a plurality of available transformations, a second transformation for a second set of source depth bands and for the transformation of associated source depth image sample values, wherein, optionally, the second transformation is determined based on the bands or the sub-region.

4. The method of one of previous claims, further comprising: encoding the target depth image with the target depth image sample bit depth to obtain an encoded target depth image; and/or
encapsulating an encoded target depth image and depth transformation information related to the applied transformation and/or the band.

5. The method of one of claim 4, wherein encapsulated data comprising the depth transformation information is signalled either at a bitstream level or at a file format level;
wherein for the bitstream level, the encapsulated data comprising the depth transformation information is signalled using a Supplemental Enhancement Information (SEI) message, an auxiliary picture and/or unused chromatic components of an image plane or
wherein for a file format level, the depth transformation information is signalled in a ISO Base Media File Format (ISOBMFF).

6. The method of claim 5, wherein for a file format level signalling the depth transformation information is carried using a timed metadata track that is added to the file and is associated to a video track that carries the sequence of target depth images; or
wherein the depth transformation information is partly caried using a box in the trak box structure or sample grouping or entity grouping and partly carried using an auxiliary video track, wherein the method comprises: adding an auxiliary video track to the file and associating the auxiliary video track to a primary video track that carries a sequence of primary pictures such as target depth images.

7. The method of one claims 1 to 6, wherein one of a first set of source depth bands associated with the first spatial sub-regions and a second set of source depth bands associated with the second spatial sub-regions is determined across the entire source depth image, such that a concatenation of these source depth bands is equal to the source depth range of the entire source depth image.

8. The method of one of previous claims, wherein different transformations are used for the first set of source depth bands of the first spatial sub-region and for the second set of source depth bands of the second spatial sub-region; or wherein different transformations are used per combination of source depth band and spatial sub-region.

9. The method of one of previous claims, wherein association information indicates the association between source depth image samples and the source depth band and the spatial sub-region; wherein the method comprises representing the association information using a composite integer mask, wherein a composite integer mask sample value indicates the source depth band and the spatial sub-region of the co-located source depth image sample; or
wherein association information indicates the association between source depth image samples and the source depth band and the spatial sub-region; wherein the method comprises representing the association information by using bounding boxes or coordinates in combination with a source depth band integer mask, wherein the bounding boxes or coordinates indicate boundaries of a spatial sub-region, such that the source depth band integer mask sample value indicates the source depth band of the co-located source depth image sample.

10. A method for decoding a depth image, the method comprising:
obtaining encapsulated depth image and depth transformation information;
parsing the depth transformation information comprising at least one of:
(a) the first and/or the second source depth sub-ranges associated with the respective spatial sub-region,
(b) the first and/or the second sets of source depth bands associated with the respective spatial sub-region,
(c) the first and/or the second applied transformation used for the respective sets of source depth bands, and
(d) association information indicating the association between source depth image samples, source depth bands and spatial sub-regions, and
(e) association information indicating a transformer used, e.g., in a decoder, and reconstructing the source depth image from the decoded depth image and the parsed depth transformation information, with the reconstructed source depth image samples taking values from the source depth range.

11. A non-transitory computer-readable storage medium comprising instructions which, when executed by a computer, cause the computer to carry out the method of any one of the preceding claims.

12. A device comprising a processing unit, wherein the device is configured for executing the method of one claims 1 to 9.

13. A data container encapsulating depth data of a scene, the data container comprising metadata for signalling depth transformation information about an association of a source depth image sample with a source depth band and a corresponding spatial sub-region of a depth image.

14. A data stream having encoded thereinto depth data of a scene, the data stream comprising:
metadata for signalling depth transformation information about an association of a source depth image sample with a source depth band and a corresponding spatial sub-region of a depth image.

15. A device comprising a processing unit, wherein the device is configured for executing the method of one of claim 10.
